# EUROPEAN PATENT APPLICATION

(11) **EP 1 995 812 A1**
(43) Date of publication of application: **26.11.2008**
(21) Application number: 07714012.7
(22) Date of filing: 09.02.2007
(51) Int. Cl.: H01M 8/04, H01M 8/10, H01M 8/24

(54) **FUEL CELL SYSTEM**

(30) Priority: 15.02.2006 JP 2006038403
(71) Applicant: Panasonic Corporation, Kadoma-shi Osaka 571-8501 (JP)
(72) Inventor: MORITA, Junji c/oMatsushita Electric Ind, 2-1-61,Shiromi, Chou-ku,Osaka 571-8501 (JP); SUGAWARA, Yasushi c/o Matushita Electric Indus, 2-1-61,Shiromi Chou-ku ,Osaka 571-8501 (JP); SHIBATA, Soichi c/o Matushita Electric Ind, 2-1-61 Shiromi, Chou-ku,Osaka 571-8501 (JP)
(74) Representative: Leinweber & Zimmermann
(86) International application number: PCT/JP2007/052400
(87) International publication number: WO 2007/094264

(57) **Abstract**

A fuel cell system (100) of the present invention includes: a fuel cell (101) which is provided with a first fuel gas inlet (121A) communicating with one end of a fuel gas supplying manifold (106) and a second fuel gas inlet (121B) communicating with the other end of the fuel gas supplying manifold (106) and causes a fuel gas and an oxidizing gas to react with each other to generate electric power; a fuel gas supplying device (120) which supplies the fuel gas; and a fuel gas inlet selecting device (211) which selectively supplies the fuel gas, which is supplied from the fuel gas supplying device (120), to the first fuel gas inlet (121A) or the second fuel gas inlet (121B).

## Description

### Technical Field

The present invention relates to a fuel cell system for use in a domestic cogeneration system or vehicle power supply which repeats electric power generation and stopping, and particularly to a fuel cell system using a polymer electrolyte fuel cell.

### Background Art

One typical example of a fuel cell is a polymer electrolyte fuel cell. In the polymer electrolyte fuel cell, an anode and a cathode are disposed to sandwich a polymer electrolyte membrane. The anode and the cathode are supplied with a fuel gas containing hydrogen and an oxidizing gas containing oxygen, such as air (hereinafter, the fuel gas and the oxidizing gas may be collectively called "reactant gas"). The polymer electrolyte fuel cell causes the fuel gas and the oxidizing gas to electrochemically react with each other, thereby generating electric power and heat at the same time.
Specifically, the polymer electrolyte fuel cell includes the polymer electrolyte membrane which selectively transports hydrogen ions, and a pair of electrodes which sandwiches the polymer electrolyte membrane. An assembly obtained by integrally assembling the electrodes and the polymer electrolyte membrane is called an electrolyte membrane-electrode assembly (MEA; Membrane Electrode Assembly).
In order to prevent the reactant gases supplied to the MEA, from leaking outside and prevent the reactant gases from mixing each other, gas sealing members or gaskets are disposed around the electrodes, respectively, of the MEA to sandwich the polymer electrolyte membrane.

Electrically-conductive separators are disposed on outer sides, respectively, of the MEA to mechanically fix the MEA and to electrically connect adjacent MEAs to each other in series (this assembly is called a "cell"). On a portion of the separator which contacts the MEA, a gas passage is formed to supply the reactant gas to the electrode surface and discharge generated water and an excess gas.

In order to supply the reactant gas to the gas passage, each separator is provided with a manifold which distributes the gas. As the manifold, there are an external manifold in which a gas supplying pipe is directly connected to the gas passage, and an internal manifold in which a through hole formed on the separator having the gas passage and an inlet of the gas passage are connected to each other to distribute the reactant gas directly through the through hole.

Then, the MEAs and the separators are alternately stacked to form a stack structure including 10 to 200 cells. The stack structure is sandwiched by end plates via current collectors and insulating plates, and these members are fixed by fastening rods to manufacture a stack of the polymer electrolyte fuel cells.

Here, for example, in a method for operating a fuel cell system adopted in the domestic cogeneration system, the electric power generation and the stopping are repeatedly carried out. Specifically, the electric power generation stops in a time period in which electric power consumption is low, and the electric power generation is carried out in a time period in which the electric power consumption is high, thereby suppressing energy costs.
Regarding such fuel cell system, proposed is a technique for suppressing the decrease of the performance of the fuel cell due to repetition of the electric power generation and the stopping.

For example, proposed is a method for stopping the fuel cell in a state where a gas in the fuel gas passage or oxidizing gas passage of the fuel cell is replaced with a humidified inactive gas or the like, and the humidified inactive gas or the like is sealed in the fuel gas passage or oxidizing gas passage of the fuel cell (see Patent Document 1). It has been reported that in accordance with the foregoing, polymer electrolyte in the fuel cell do not dehydrate even in the stopping, and therefore, the deterioration of the performance of the fuel cell can be suppressed.
Patent Document 1: Japanese Laid-Open Patent Application Publication HEI 6-251788

### Disclosure of the Invention

### Problems to be Solved by the Invention

However, the configuration described in Patent Document 1 has such a problem that the concentrations of the reactant gas and replacement gas in respective cells of the cell stack become non-uniform, and this deteriorates the electric power generating performance of the entire cell stack.

The present invention was made to solve such problem, and an object of the present invention is to provide a fuel cell system in which gas concentrations in the cells of the cell stack are uniformized to suppress the decrease of the electric power generating performance of the entire cell stack.

### Means for Solving the Problems

The present inventors have diligently studied to solve the above problem.

As a result, the present inventors have found that in the fuel cell system using the cell stack in which a plurality of cells are stacked, the electric power generating performance is influenced by gas replacement states in respective cells of the cell stack in a start-up time and in a stop time.

To be specific, the followings have been revealed by the present inventors through a simulation test of the gas replacement of the fuel cell system.

In a case where the cell stack of the fuel cell system is filled with a certain type of gas, and this gas in the cell stack is replaced with a different type of gas, turning flow and vortex flow occur in the manifold if the replacement gas is low in flow rate. Therefore, in the cell stack, a time for the gas replacement of each cell close to the inlet of the reactant gas is short whereas a time for the gas replacement of each cell far from the inlet of the reactant gas is long. Such state occurs in respective steps in the start-up time and stop time of the fuel cell system, and may be a cause of the deterioration of the electric power generating performance of the fuel cell.

To be specific, it is thought that in the start-up time of the fuel cell system, if the reactant gas for causing the replacement gas to discharge is low in flow rate, some of the cells start generating electric power in a state where the reactant gas is not adequately supplied, and the repetition of this situation deteriorates the electric power generating performance. Moreover, in a case where the time for the replacement is extended until the gas in the cell stack is adequately replaced with the fuel gas, the cell stack is subjected to an open circuit voltage for a long period of time, so that the deterioration of the catalyst may reduce the electric power generating performance.
Meanwhile, in the stop time, the residual gas stays for a long period of time in the cell whose gas has not been adequately replaced with the replacement gas, so that the deterioration of the catalyst reduces the electric power generating performance. Moreover, in a case where the time for the replacement is extended until the gas in the cell stack is adequately replaced with the replacement gas, times in which the cell is subjected to the residual gas differ depending on respective cells, so that the electric power generating performances of respective cells in the stack become non-uniform.
Moreover, in the conventional fuel cell system, there is only one gas inlet opening from the gas supplying pipe to the manifold, a gas inflow direction in the manifold is always constant with respect to a direction in which the cells are stacked. Therefore, an influence caused depending on whether the gas replacement is adequate or inadequate is accumulated by the repetition of the electric power generation and the stopping, and this increases the difference of the electric power generating performance among the cells. Thus, the electric power generating performance of the entire cell stack deteriorates.

The above problem occurs even if the gas in the fuel cell system is not replaced with the replacement gas. To be specific, by the repetition of the electric power generation and the stopping, the concentrations of the fuel gas become non-uniform between the cells close to the inlet of the fuel gas and the cells far from the inlet of the fuel gas. Moreover, by the repetition of the electric power generation and the stopping, the concentrations of the oxidizing gas become non-uniform between the cells close to the inlet of the oxidizing gas and the cells far from the inlet of the oxidizing gas. Thus, the electric power generating performance of the entire cell stack deteriorates.
Then, a fuel cell system of the present invention includes: a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first fuel gas inlet which communicates with one end of the fuel gas supplying manifold; and a second fuel gas inlet which communicates with the other end of the fuel gas supplying manifold, the fuel cell being configured to cause the fuel gas and the oxidizing gas to react with each other in the cells to generate electric power; a fuel gas supplying device which supplies the fuel gas; and a fuel gas inlet selecting device which selectively supplies the fuel gas, which is supplied from the fuel gas supplying device, to a first fuel gas inlet or a second fuel gas inlet.
With this configuration, when supplying the fuel gas to the fuel cell, the destination to which the fuel gas is supplied can be selected from the first fuel gas inlet and the second fuel gas inlet. Therefore, when the electric power generation and the stopping are repeatedly carried out, the concentrations of the fuel gas become uniform between the cells close to the first fuel gas inlet and the cells far from the first fuel gas inlet. With this, the decrease of the electric power generating performance of the entire cell stack is suppressed.

The fuel cell system may further include a control device which controls the fuel gas inlet selecting device such that a destination to which the fuel gas supplied from the fuel gas supplying device is supplied is switched between the first fuel gas inlet and the second fuel gas inlet.

With this configuration, when the electric power generation and the stopping are repeatedly carried out, the concentrations of the fuel gas become uniform between the cells close to the first fuel gas inlet and the cells far from the first fuel gas inlet. With this, the decrease of the electric power generating performance of the entire cell stack is suppressed.
The fuel cell system may further include: a replacement gas supplying device which supplies a replacement gas used to replace the fuel gas; and a selective gas supplying device which selectively supplies the fuel gas supplied from the fuel gas supplying device or the replacement gas supplied from the replacement gas supplying device, wherein the fuel gas inlet selecting device may be configured to selectively supply the fuel gas or replacement gas, which is supplied from the selective gas supplying device, to the first fuel gas inlet or the second fuel gas inlet.
With this configuration, when supplying the fuel gas and the replacement gas to the fuel cell to replace the gas in the fuel cell, the destination to which the fuel gas and the replacement gas are supplied can be selected from the first fuel gas inlet and the second fuel gas inlet. Therefore, the gas concentrations (replacement states) hardly differ between the cells close to the fuel gas inlet and the cells far from the fuel gas inlet, and the concentrations of the fuel gas and replacement gas in respective cells of the cell stack become uniform. With this, the decrease of the electric power generating performance of the entire cell stack is suppressed.
The fuel cell system may further include a control device which controls the fuel gas inlet selecting device such that a destination to which the gas supplied from the selective gas supplying device is supplied is switched between the first fuel gas inlet and the second fuel gas inlet, wherein: the fuel cell system may include an electric power generating mode of generating the electric power to supply the electric power to an external load, a start-up mode of transitioning from a stop state to the electric power generating mode, and a stop mode of transitioning from the electric power generating mode to the stop state; the control device may be configured to control the selective gas supplying device such that the fuel gas is supplied to purge a gas in the cell stack in the start-up mode, the fuel gas is supplied in the electric power generating mode, and the replacement gas is supplied to replace the gas in the cell stack with the replacement gas in the stop mode; and the control device may be configured to control the fuel gas inlet selecting device such that when switching between any two of the start-up mode, the electric power generating mode and the stop mode, or in any one of the modes, the destination to which the gas supplied from the selective gas supplying device is supplied is switched between the first fuel gas inlet and the second fuel gas inlet.
With this configuration, when switching between any two of the start-up mode, the electric power generating mode and the stop mode, or in any of the modes, the fuel gas inlet to which the gas is supplied can be switched. Therefore, the flow direction of the gas with respect to the direction in which the cells are stacked can be switched. On this account, the time for the gas replacement in the cell stack is shortened. Moreover, since the gas replacement states of respective cells can be made uniform, the electric power generating performances of respective cells in the cell stack are also made uniform. Thus, the decrease of the electric power generating performance of the entire cell stack can be suppressed.
The control device may be configured to control the fuel gas inlet selecting device such that when switching between the electric power generating mode and the stop mode, the destination to which the gas supplied from the selective gas supplying device is supplied is switched between the first fuel gas inlet and the second fuel gas inlet.

With this configuration, when switching between the electric power generating mode and the stop mode, the fuel gas inlet to which the gas is supplied can be switched. Therefore, the gas replacement states of respective cells can be made uniform. Thus, the electric power generating performances of respective cells in the cell stack are also made uniform. On this account, the decrease of the electric power generating performance of the entire cell stack can be suppressed.

The control device may be configured to control the fuel gas inlet selecting device such that in the start-up mode or the stop mode, the destination to which the gas supplied from the selective gas supplying device is supplied is switched plural times between the first fuel gas inlet and the second fuel gas inlet.

With this configuration, in each start-up mode or each stop mode, the fuel gas inlet to which the gas is supplied can be switched plural times. Therefore, the time for the gas replacement in the cell stack can be further shortened.

The fuel gas inlet selecting device may include: a three-way valve which has first to third ports and is able to selectively connect the third port to the first port or the second port; a first gas pipe which connects the first port to the first fuel gas inlet; and a second gas pipe which connects the second port to the second fuel gas inlet, and the third port may be connected to a gas pipe which supplies the gas from the selective gas supplying device.

The fuel gas inlet selecting device may include: a T-shaped joint; a first gas pipe which connects a first end of the T-shaped joint to the first fuel gas inlet; an on-off valve disposed on a portion of the first gas pipe; a second gas pipe which connects a second end of the T-shaped joint to the second fuel gas inlet; and an on-off valve disposed on a portion of the second gas pipe, and a third end of the T-shaped joint may be connected to a gas pipe which supplies the gas from the selective gas supplying device.
Moreover, a method for operating a fuel cell system of the present invention is a method for operating a fuel cell system comprising: a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first fuel gas inlet which communicates with one end of the fuel gas supplying manifold; and a second fuel gas inlet which communicates with the other end of the fuel gas supplying manifold, the fuel cell being configured to cause the fuel gas and the oxidizing gas to react with each other in the cells to generate electric power; a fuel gas supplying device which supplies the fuel gas; a replacement gas supplying device which supplies a replacement gas used to replace the fuel gas; a selective gas supplying device which selectively supplies the fuel gas supplied from the fuel gas supplying device or the replacement gas supplied from the replacement gas supplying device; and a fuel gas inlet selecting device which selectively supplies the fuel gas or replacement gas, which is supplied from the selective gas supplying device, to the first fuel gas inlet or the second fuel gas inlet, the method including: a first step, including an electric power generating mode of generating the electric power to supply the electric power to an external load, a start-up mode of transitioning from a stop state to the electric power generating mode, and a stop mode of transitioning from the electric power generating mode to the stop state, of controlling the selective gas supplying device such that the fuel gas is supplied to purge a gas in the cell stack in the start-up mode, the fuel gas is supplied in the electric power generating mode, and the replacement gas is supplied to replace the gas in the cell stack with the replacement gas in the stop mode; and a second step of controlling the fuel gas inlet selecting device such that when switching between any two of the start-up mode, the electric power generating mode and the stop mode, or in any one of the modes, a destination to which the gas supplied from the selective gas supplying device is supplied is switched between the first fuel gas inlet and the second fuel gas inlet.
With this configuration, when switching between any two of the start-up mode, the electric power generating mode and the stop mode, or in any of the modes, the fuel gas inlet to which the gas is supplied can be switched. Therefore, the flow direction of the gas with respect to the direction in which the cells are stacked can be switched. On this account, the time for the gas replacement in the cell stack is shortened. Moreover, since the gas replacement states of respective cells can be made uniform, the electric power generating performances of respective cells in the cell stack are also made uniform. Thus, the decrease of the electric power generating performance of the entire cell stack can be suppressed.
Moreover, a fuel cell system of the present invention includes: a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first oxidizing gas inlet which communicates with one end of the oxidizing gas supplying manifold; and a second oxidizing gas inlet which communicates with the other end of the oxidizing gas supplying manifold, the fuel cell being configured to cause the fuel gas and the oxidizing gas to react with each other in the cells to generate electric power; an oxidizing gas supplying device which supplies the oxidizing gas; a selective gas supplying device which selectively supplies the oxidizing gas supplied from the oxidizing gas supplying device; and an oxidizing gas inlet selecting device which selectively supplies the oxidizing gas, which is supplied from the selective gas supplying device, to the first oxidizing gas inlet or the second oxidizing gas inlet.

With this configuration, when supplying the oxidizing gas to the fuel cell, the destination to which the oxidizing gas is supplied can be selected from the first oxidizing gas inlet and the second oxidizing gas inlet. Therefore, when the electric power generation and the stopping are repeatedly carried out, the concentrations of the oxidizing gas become uniform between the cells close to the first oxidizing gas inlet and the cells far from the first oxidizing gas inlet. With this, the decrease of the electric power generating performance of the entire cell stack is suppressed.

The fuel cell system may further include a control device which controls the oxidizing gas inlet selecting device such that a destination to which the oxidizing gas supplied from the oxidizing gas supplying device is supplied is switched between the first oxidizing gas inlet and the second oxidizing gas inlet.

With this configuration, when the electric power generation and the stopping are repeatedly carried out, the concentrations of the oxidizing gas become uniform between the cells close to the first oxidizing gas inlet and the cells far from the first oxidizing gas inlet. With this, the decrease of the electric power generating performance of the entire cell stack is suppressed.
The fuel cell system may further include: a replacement gas supplying device which supplies a replacement gas used to replace the oxidizing gas; and a selective gas supplying device which selectively supplies the oxidizing gas supplied from the oxidizing gas supplying device or the replacement gas supplied from the replacement gas supplying device, wherein the oxidizing gas inlet selecting device may be configured to selectively supply the oxidizing gas or replacement gas, which is supplied from the selective gas supplying device, to the first oxidizing gas inlet or the second oxidizing gas inlet.
With this configuration, when supplying the oxidizing gas and the replacement gas to the fuel cell to replace the gas in the fuel cell, the destination to which the oxidizing gas and the replacement gas are supplied can be selected from the first oxidizing gas inlet and the second oxidizing gas inlet. Therefore, the gas concentrations (replacement states) hardly differ between the cells close to the oxidizing gas inlet and the cells far from the oxidizing gas inlet, and the concentrations of the oxidizing gas and replacement gas in respective cells of the cell stack become uniform. With this, the decrease of the electric power generating performance of the entire cell stack is suppressed.
The fuel cell system may further include a control device which controls the oxidizing gas inlet selecting device such that a destination to which the gas supplied from the selective gas supplying device is supplied is switched between the first oxidizing gas inlet and the second oxidizing gas inlet, wherein: the fuel cell system may include an electric power generating mode of generating the electric power to supply the electric power to an external load, a start-up mode of transitioning from a stop state to the electric power generating mode, and a stop mode of transitioning from the electric power generating mode to the stop state; the control device may be configured to control the selective gas supplying device such that the oxidizing gas is supplied to purge a gas in the cell stack in the start-up mode, the oxidizing gas is supplied in the electric power generating mode, and the replacement gas is supplied to replace the gas in the cell stack with the replacement gas in the stop mode; and the control device may be configured to control the oxidizing gas inlet selecting device such that when switching between any two of the start-up mode, the electric power generating mode and the stop mode, or in any one of the modes, the destination to which the gas supplied from the selective gas supplying device is supplied is switched between the first oxidizing gas inlet and the second oxidizing gas inlet.

With this configuration, when switching between any two of the start-up mode, the electric power generating mode and the stop mode, or in any of the modes, the oxidizing gas inlet to which the gas is supplied can be switched. Therefore, the flow direction of the gas with respect to the direction in which the cells are stacked can be switched. On this account, the time for the gas replacement in the cell stack is shortened. Moreover, since the gas replacement states of respective cells can be made uniform, the electric power generating performances of respective cells in the cell stack are also made uniform. Thus, the decrease of the electric power generating performance of the entire cell stack can be suppressed.

The control device may be configured to control the oxidizing gas inlet selecting device such that when switching between the electric power generating mode and the stop mode, the destination to which the gas supplied from the selective gas supplying device is supplied is switched between the first oxidizing gas inlet and the second oxidizing gas inlet.

With this configuration, when switching between the electric power generating mode and the stop mode, the oxidizing gas inlet to which the gas is supplied can be switched. Therefore, the gas replacement states of respective cells can be made uniform. Thus, the electric power generating performances of respective cells in the cell stack are also made uniform. Thus, the decrease of the electric power generating performance of the entire cell stack is suppressed.

The control device may be configured to control the oxidizing gas inlet selecting device such that in the start-up mode or the stop mode, the destination to which the gas supplied from the selective gas supplying device is supplied is switched plural times between the first oxidizing gas inlet and the second oxidizing gas inlet.

With this configuration, in each start-up mode or each stop mode, the oxidizing gas inlet to which the gas is supplied can be switched plural times. Therefore, the time for the gas replacement in the cell stack is further shortened.

The oxidizing gas inlet selecting device may include: a three-way valve which has first to third ports and is able to selectively connect the third port to the first port or the second port; a first gas pipe which connects the first port to the first oxidizing gas inlet; and a second gas pipe which connects the second port to the second oxidizing gas inlet, and the third port may be connected to a gas pipe which supplies the gas from the selective gas supplying device.

The oxidizing gas inlet selecting device may include a T-shaped joint; a first gas pipe which connects a first end of the T-shaped joint to the first oxidizing gas inlet; an on-off valve disposed on a portion of the first gas pipe; a second gas pipe which connects a second end of the T-shaped joint to the second oxidizing gas inlet; and an on-off valve disposed on a portion of the second gas pipe, and a third end of the T-shaped joint may be connected to a gas pipe which supplies the gas from the selective gas supplying device.
Moreover, a method for operating a fuel cell system of the present invention is a method for operating a fuel cell system including: a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first oxidizing gas inlet which communicates with one end of the oxidizing gas supplying manifold; and a second oxidizing gas inlet which communicates with the other end of the oxidizing gas supplying manifold, the fuel cell being configured to cause the fuel gas and the oxidizing gas to react with each other in the cells to generate electric power; an oxidizing gas supplying device which supplies the oxidizing gas; a replacement gas supplying device which supplies a replacement gas used to replace the oxidizing gas; a selective gas supplying device which selectively supplies the oxidizing gas supplied from the oxidizing gas supplying device or the replacement gas supplied from the replacement gas supplying device; an oxidizing gas inlet selecting device which selectively supplies the oxidizing gas or replacement gas, which is supplied from the selective gas supplying device, to the first oxidizing gas inlet or the second oxidizing gas inlet; and a control device, the method including the steps of: where the fuel cell system includes an electric power generating mode of generating the electric power to supply the electric power to an external load, a start-up mode of transitioning from a stop state to the electric power generating mode, and a stop mode of transitioning from the electric power generating mode to the stop state, controlling the selective gas supplying device such that the oxidizing gas is supplied to purge a gas in the cell stack in the start-up mode, the oxidizing gas is supplied in the electric power generating mode, and the replacement gas is supplied to replace the gas in the cell stack with the replacement gas in the stop mode; and controlling the oxidizing gas inlet selecting device such that when switching between any two of the start-up mode, the electric power generating mode and the stop mode, or in any one of the modes, a destination to which the gas supplied from the selective gas supplying device is supplied is switched between the first oxidizing gas inlet and the second oxidizing gas inlet.

With this configuration, when switching between any two of the start-up mode, the electric power generating mode and the stop mode, or in any of the modes, the oxidizing gas inlet to which the gas is supplied can be switched. Therefore, the flow direction of the gas with respect to the direction in which the cells are stacked can be switched. On this account, the time for the gas replacement in the cell stack is shortened. Moreover, since the gas replacement states of respective cells can be made uniform, the electric power generating performances of respective cells in the cell stack are also made uniform. Thus, the decrease of the electric power generating performance of the entire cell stack can be suppressed.
Moreover, a fuel cell of the present invention includes: a plurality of cells, each including a polymer electrolyte membrane, and a first electrode and a second electrode which are formed to sandwich the polymer electrolyte membrane, one of the first electrode and the second electrode being an anode, and the other one of them being a cathode; a cell stack formed by stacking the cells; a first reactant gas supplying manifold, a first reactant gas discharging manifold, a second reactant gas supplying manifold and a second reactant gas discharging manifold which are formed on the cell stack to extend in a direction in which the cells are stacked; a first reactant gas passage which guides a first reactant gas from the first reactant gas supplying manifold to the first electrode and further to the first reactant gas discharging manifold, the first reactant gas being a reactant gas which is a fuel gas or an oxidizing gas and is supplied to the one electrode which is the anode or the cathode; a second reactant gas passage which guides a second reactant gas from the second reactant gas supplying manifold to the second electrode and further to the second reactant gas discharging manifold, the second reactant gas being a reactant gas which is the fuel gas or the oxidizing gas and is supplied to the other electrode which is the anode or the cathode; one first reactant gas inlet which communicates with one end of the first reactant gas supplying manifold; and another first reactant gas inlet which communicates with the other end of the first reactant gas supplying manifold.

With this configuration, the destination to which the reactant gas is supplied can be selected from the above-described one first reactant gas inlet and the above-described another first reactant gas inlet. To be specific, the destination to which the fuel gas is supplied can be selected from the above-described one first reactant gas inlet (first fuel gas inlet) and the above-described another first reactant gas inlet (second fuel gas inlet). Moreover, the destination to which the oxidizing gas is supplied can be selected from the above-described one first reactant gas inlet (first oxidizing gas inlet) and the above-described another first reactant gas inlet (second oxidizing gas inlet).
The above object, other objects, features and advantages of the present invention will be made clear by the following detailed explanation of preferred embodiments with reference to the attached drawings.

### Effects of the Invention

The present invention is configured as above to obtain such an effect that the concentrations of the gas are uniformized among the cells of the cell stack in the fuel cell system to suppress the deterioration of the electric power generating performance of the entire cell stack even if the start-up and the stopping are repeatedly carried out.

### Brief Description of the Drawings

[Fig. 1] Fig. 1 is a block diagram showing one example of the configuration of a fuel cell system according to Embodiment 1 of the present invention.
[Fig. 2] Fig. 2 is a partial block diagram showing components configured to supply a fuel gas, in the fuel cell system of Embodiment 1.
[Fig. 3] Fig. 3 is a diagram showing a flow direction of the fuel gas in a fuel gas supplying manifold of the fuel cell system of Fig. 2.
[Fig. 4] Fig. 4 is a partial block diagram showing components configured to supply an oxidizing gas, in the fuel cell system of Embodiment 1.
[Fig. 5] Fig. 5 is a diagram showing the flow direction of the oxidizing gas in an oxidizing gas supplying manifold of the fuel cell system of Fig. 4.
[Fig. 6] Fig. 6 is a partial block diagram showing components configured to supply the fuel gas, in the fuel cell system of Embodiment 2.
[Fig. 7] Fig. 7 is a diagram showing the flow direction of the fuel gas in the fuel gas supplying manifold that is a component of the fuel cell system of Fig. 6.
[Fig. 8] Fig. 8 is a partial block diagram showing components configured to supply the oxidizing gas, in the fuel cell system of Embodiment 2.
[Fig. 9] Fig. 9 is a diagram showing the flow direction of the oxidizing gas in the oxidizing gas supplying manifold that is a component of the fuel cell system of Fig. 8.
[Fig. 10] Fig. 10 is a partial block diagram showing components configured to supply the fuel gas, in the fuel cell system of Comparative Embodiment.
[Fig. 11] Fig. 11 is a diagram showing the flow direction of the fuel gas in the fuel gas supplying manifold that is a component of the fuel cell system of Fig. 10.
[Fig. 12] Fig. 12 is a partial block diagram showing components configured to supply the oxidizing gas, in the fuel cell system of Comparative Embodiment.
[Fig. 13] Fig. 13 is a diagram showing the flow direction of the oxidizing gas in the oxidizing gas supplying manifold that is a component of the fuel cell system of Fig. 12.
[Fig. 14] Fig. 14 is a partial block diagram showing components configured to supply the fuel gas, in the fuel cell system of Modification Example of the present invention.
[Fig. 15] Fig. 15 is a diagram showing the flow direction of the fuel gas in the fuel gas supplying manifold of the fuel cell system of Fig. 14.
[Fig. 16] Fig. 16 is a partial block diagram showing components configured to supply the oxidizing gas, in the fuel cell system of Modification Example of the present invention.
[Fig. 17] Fig. 17 is a diagram showing the flow direction of the oxidizing gas in the oxidizing gas supplying manifold of the fuel cell system of Fig. 16.
[Fig. 18] Fig. 18 is a diagram showing operating modes of each of the fuel cell systems of Example 1, Example 2 and Comparative Example.
[Fig. 19] Fig. 19 is a graph showing cell voltages of respective cells of the cell stack of each of the fuel cell systems in Example 1, Example 2 and Comparative Example.

### Explanation of Reference Numbers

- 100, 200, 300, 400: fuel cell system
- 101: fuel cell
- 102: cell stack
- 103: MEA
- 104: separator
- 106: fuel gas supplying manifold
- 107: fuel gas discharging manifold
- 108: oxidizing gas supplying manifold
- 109: oxidizing gas discharging manifold
- 110: fuel gas outlet
- 111: fuel gas discharging passage
- 112: fuel gas discharging valve
- 115: oxidizing gas outlet
- 116: oxidizing gas discharging passage
- 117: oxidizing gas discharging valve
- 120: fuel gas supplying device
- 121: fuel gas inlet
- 121A: A-side fuel gas inlet
- 121B: B-side fuel gas inlet
- 122: fuel gas supplying passage
- 123A, 223A: A-side fuel gas supplying pipe
- 123B, 223B: B-side fuel gas supplying pipe
- 125, 145: gas passage switching valve
- 125a, 145a: first port
- 125b, 145b: second port
- 125c, 145c: third port
- 126, 128: fuel gas supplying pipe
- 127, 147, 224, 244: T-shaped joint
- 129: fuel gas supplying valve
- 130: replacement gas supplying device
- 131: replacement gas supplying pipe
- 132: replacement gas supplying valve
- 140: oxidizing gas supplying device
- 141: oxidizing gas inlet
- 141A: A-side oxidizing gas inlet
- 141B: B-side oxidizing gas inlet
- 142: oxidizing gas supplying passage
- 143A, 243A: A-side oxidizing gas supplying pipe
- 143B, 243B: B-side oxidizing gas supplying pipe
- 146, 148: oxidizing gas supplying pipe
- 149: oxidizing gas supplying valve
- 150: replacement gas supplying device
- 151: replacement gas supplying pipe
- 152: replacement gas supplying valve
- 160: control device
- 201: fuel gas passage
- 202: oxidizing gas passage
- 211: fuel gas inlet selecting device
- 212, 222: selective gas supplying device
- 221: oxidizing gas inlet selecting device
- 225A: A-side fuel gas supplying valve
- 225B: B-side fuel gas supplying valve
- 245A: A-side oxidizing gas supplying valve
- 245B: B-side oxidizing gas supplying valve

### Best Mode for Carrying Out the Invention

Hereinafter, preferred embodiments of the present invention will be explained in reference to the drawings.

### Embodiment 1

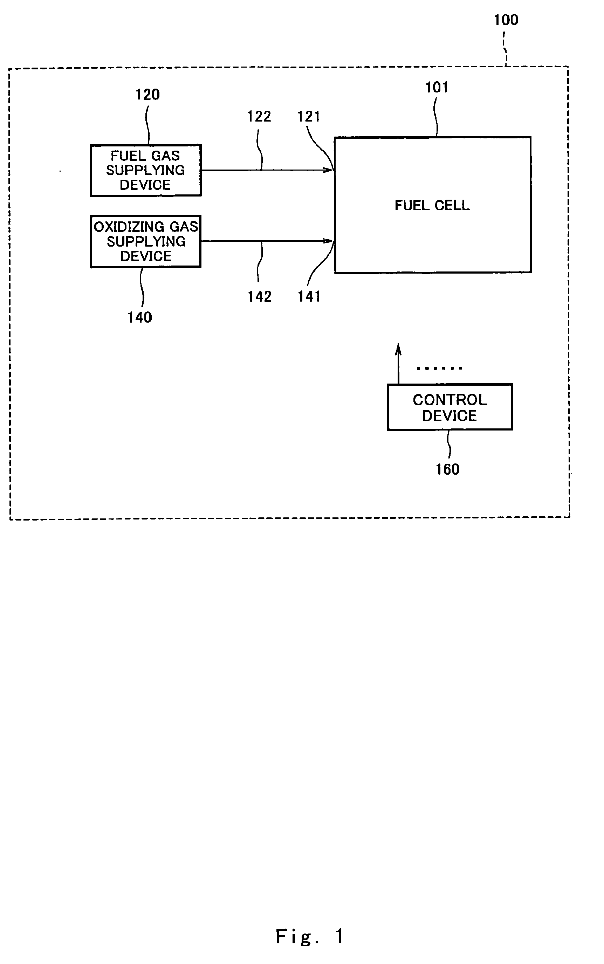

Fig. 1 is a block diagram schematically showing the configuration of the fuel cell system according to Embodiment 1 of the present invention.
As shown in Fig. 1, a fuel cell system 100 of Embodiment 1 of the present invention includes a polymer electrolyte fuel cell (hereinafter simply referred to as "fuel cell") 101. The fuel cell 101 includes a fuel gas inlet 121. The fuel gas inlet 121 is connected to a fuel gas supplying device 120 via a fuel gas supplying passage 122. In addition, the fuel cell 101 includes an oxidizing gas inlet 141. The oxidizing gas inlet 141 is connected to an oxidizing gas supplying device 140 via an oxidizing gas supplying passage 142.

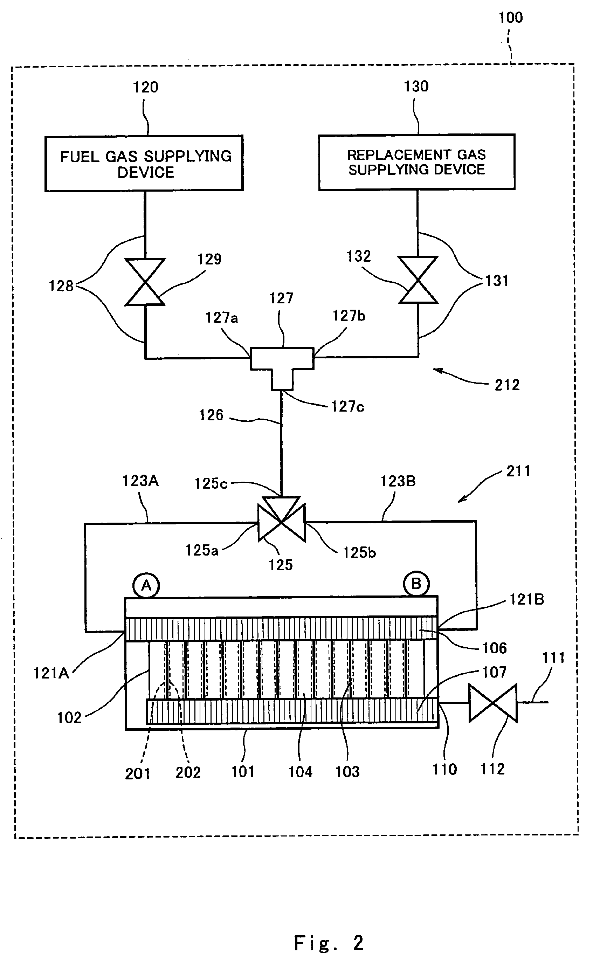

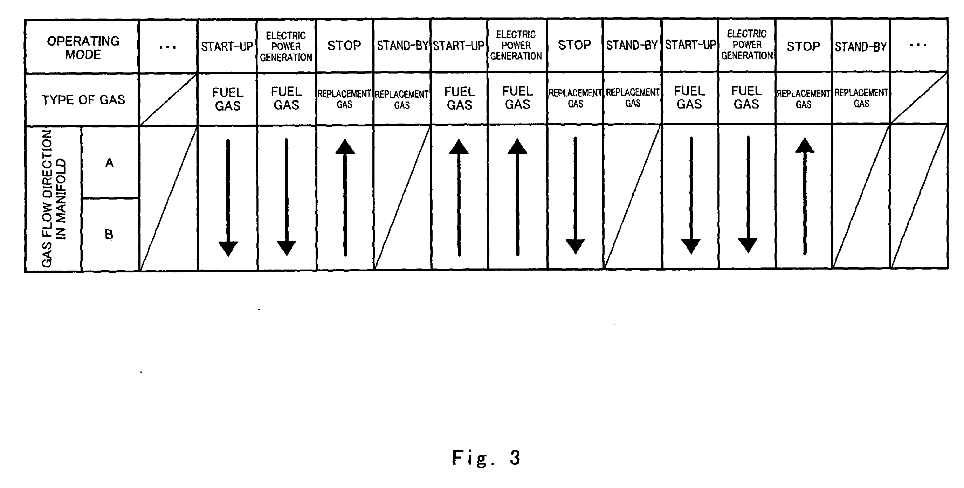

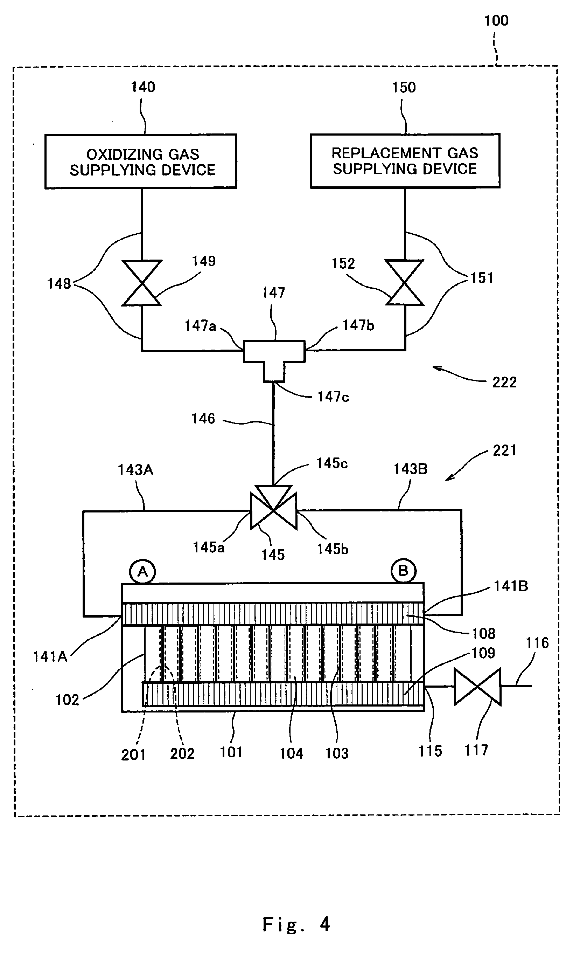

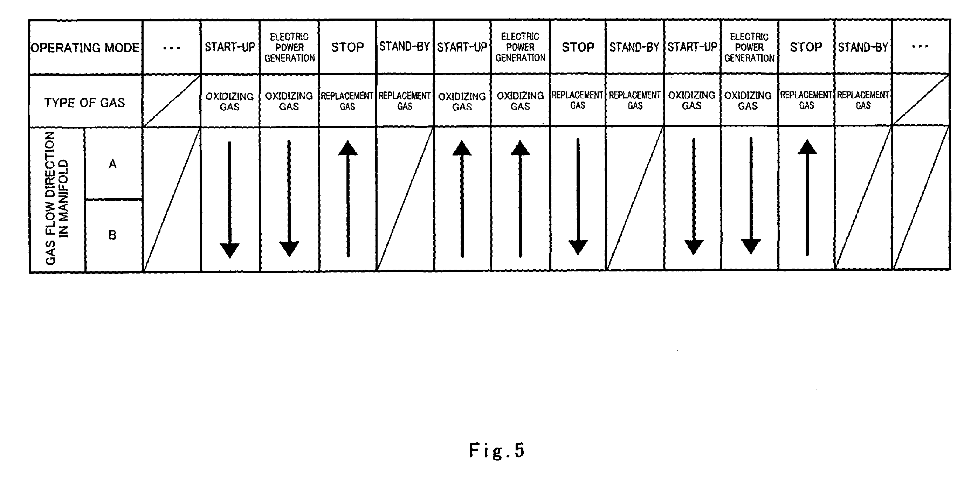

The fuel cell system 100 includes a control device 160. The control device 160 is constructed of a processing unit, such as a microcomputer, to control necessary components of the fuel cell system 100, thereby controlling the operation of the fuel cell system 100. In the present description, the control device 160 denotes not only a single control device but also a group of a plurality of control devices which cooperate to carry out the control. Therefore, the control device 160 does not have to be constructed of a single control device, and may be constructed of a plurality of control devices which are dispersively disposed and cooperate to control the operation of the fuel cell system 100.
Next, components of the fuel cell system 100 of the present embodiment will be explained in detail. Fig. 2 is a partial block diagram showing components configured to supply a fuel gas, in the fuel cell system 100 of Embodiment 1. Fig. 3 is a diagram showing a flow direction of the fuel gas in a fuel gas supplying manifold 106 of the fuel cell system of Fig. 2. Fig. 4 is a partial block diagram showing components configured to supply an oxidizing gas, in the fuel cell system 100 of Embodiment 1. Fig. 5 is a diagram showing the flow direction of the oxidizing gas in an oxidizing gas supplying manifold 108 of the fuel cell system of Fig. 4.

As shown in Figs. 2 and 4, the fuel cell 101 includes a cell stack 102. The cell stack 102 is configured such that a plurality of cells are stacked. The cell is configured to include: an MEA 103 having electrodes (anode and cathode; not shown) and a polymer electrolyte membrane (not shown); and separators 104 disposed to contact both main surfaces, respectively, of the MEA 103.
A fuel gas supplying manifold 106, a fuel gas discharging manifold 107, an oxidizing gas supplying manifold 108 and an oxidizing gas discharging manifold 109 are formed in the cell stack 102 so as to extend in a direction in which the cells are stacked. In each cell, a fuel gas passage 201 is formed on an inner surface (surface contacting the MEA 103) of one of a pair of separators 104, to cause the fuel gas supplying manifold 106 and the fuel gas discharging manifold 107 to communicate with each other. Moreover, in each cell, an oxidizing gas passage 202 is formed on an inner surface (surface contacting the MEA 103) of the other one of a pair of separators 104, to cause the oxidizing gas supplying manifold 108 and the oxidizing gas discharging manifold 109 to communicate with each other. Since the fuel gas passage 201 and the oxidizing gas passage 202 are formed in a known manner, explanations thereof are omitted here.

A first end (hereinafter referred to as "A end") of the fuel gas supplying manifold 106 communicates with an A-side fuel gas inlet 121A formed on a first end of the cell stack 102. Moreover, a second end (hereinafter referred to as "B end") of the fuel gas supplying manifold 106 communicates with a B-side fuel gas inlet 121B formed on a second end of the cell stack 102. Further, a first end of the fuel gas discharging manifold 107 is closed, and a second end thereof communicates with a fuel gas outlet 110. The fuel gas outlet 110 is formed on the second end (end on which the B-side fuel gas inlet 121B is formed) of the cell stack 102.
The A-side fuel gas inlet 121A is connected to a first end of an A-side fuel gas supplying pipe 123A as the fuel gas supplying passage 122. The B-side fuel gas inlet 121B is connected to a first end of a B-side fuel gas supplying pipe 123B as the fuel gas supplying passage 122. The fuel gas outlet 110 is connected to a fuel gas discharging passage 111. A fuel gas discharging valve 112 is disposed on a portion of the fuel gas discharging passage 111.
A second end of the A-side fuel gas supplying pipe 123A is connected to a first port 125a of a gas passage switching valve 125. A second end of the B-side fuel gas supplying pipe 123B is connected to a second port 125b of the gas passage switching valve 125. A third port 125c of the gas passage switching valve 125 is connected to an outlet 127c of a T-shaped joint 127 via a fuel gas supplying pipe 126 as the fuel gas supplying passage 122. In the present embodiment, the gas passage switching valve 125 is constructed of a three-way valve. The gas passage switching valve (three-way valve) 125, the A-side fuel gas supplying pipe 123A and the B-side fuel gas supplying pipe 123B constitute a fuel gas inlet selecting device 211.

A first inlet 127a of the T-shaped joint 127 is connected to the fuel gas supplying device 120 via a fuel gas supplying pipe 128 as the fuel gas supplying passage 122. A fuel gas supplying valve 129 is disposed on a portion of the fuel gas supplying pipe 128. By opening or closing the fuel gas supplying valve 129, the fuel gas is supplied from the fuel gas supplying device 120, or the supply of the fuel gas stops. Examples of the fuel gas are a hydrogen gas, and a reformed gas obtained by reforming a hydrocarbon gas. In the present embodiment, the fuel gas supplying device 120 is constructed of a hydrogen generator which generates the reformed gas as the fuel gas from a material gas. In the present embodiment, a natural gas is used as the material gas.
Meanwhile, a second inlet 127b of the T-shaped joint 127 is connected to a replacement gas supplying device 130 via a replacement gas supplying pipe 131. A replacement gas supplying valve 132 is disposed on a portion of the replacement gas supplying pipe 131. By opening or closing the replacement gas supplying valve 132, the replacement gas is supplied from the replacement gas supplying device 130, or the supply of the replacement gas stops. The T-shaped joint 127, the fuel gas supplying pipe 128, the fuel gas supplying valve 129, the replacement gas supplying pipe 131 and the replacement gas supplying valve 132 constitute a selective gas supplying device 212. An inactive gas is used as the replacement gas. The inactive gas means a chemically inactive gas, and examples of the inactive gas are noble gases, such as helium, argon and neon, and nitrogen. Another example of the inactive gas in the present description is a gas (for example, a natural gas, a gas obtained by removing sulfur component from a city gas containing the natural gas as a major component, or the like) which is inactive under an operating environment of the fuel cell 101 and does not deteriorate the fuel cell 101. In the present embodiment, nitrogen is used as the inactive gas.
Meanwhile, a first end (hereinafter referred to as "A end") of the oxidizing gas supplying manifold 108 communicates with an A-side oxidizing gas inlet 141A formed on the first end of the cell stack 102. Moreover, a second end (hereinafter referred to as "B end") of the oxidizing gas supplying manifold 108 communicates with a B-side oxidizing gas inlet 141B formed on the second end of the cell stack 102. Further, a first end of the oxidizing gas discharging manifold 109 is closed, and a second end thereof communicates with an oxidizing gas outlet 115. The oxidizing gas outlet 115 is formed on the second end (end on which the B-side oxidizing gas inlet 141B is formed) of the cell stack 102.
The A-side oxidizing gas inlet 141A is connected to a first end of an A-side oxidizing gas supplying pipe 143A as the oxidizing gas supplying passage 142. The B-side oxidizing gas inlet 141B is connected to a first end of a B-side oxidizing gas supplying pipe 143B as the oxidizing gas supplying passage 142. The oxidizing gas outlet 115 is connected to an oxidizing gas discharging passage 116. An oxidizing gas discharging valve 117 is disposed on a portion of the oxidizing gas discharging passage 116.
A second end of the A-side oxidizing gas supplying pipe 143A is connected to a first port 145a of a gas passage switching valve 145. A second end of the B-side oxidizing gas supplying pipe 143B is connected to a second port 145b of the gas passage switching valve 145. A third port 145c of the gas passage switching valve 145 is connected to an outlet 147c of a T-shaped joint 147 via an oxidizing gas supplying pipe 146 as the oxidizing gas supplying passage 142. In the present embodiment, the gas passage switching valve 145 is constructed of a three-way valve. The gas passage switching valve (three-way valve) 145, the A-side oxidizing gas supplying pipe 143A and the B-side oxidizing gas supplying pipe 143B constitute an oxidizing gas inlet selecting device 221.

A first inlet 147a of the T-shaped joint 147 is connected to the oxidizing gas supplying device 140 via an oxidizing gas supplying pipe 148 as the oxidizing gas supplying passage 142. An oxidizing gas supplying valve 149 is disposed on a portion of the oxidizing gas supplying pipe 148. By opening or closing the oxidizing gas supplying valve 149, the oxidizing gas is supplied from the oxidizing gas supplying device 140, or the supply of the oxidizing gas stops. In the present embodiment, the oxidizing gas supplying device 140 is constituted by an air blower. In the present embodiment, air is used as the oxidizing gas.
Meanwhile, a second inlet 147b of the T-shaped joint 147 is connected to a replacement gas supplying device 150 via a replacement gas supplying pipe 151. A replacement gas supplying valve 152 is disposed on a portion of the replacement gas supplying pipe 151. By opening or closing the replacement gas supplying valve 152, the replacement gas is supplied from the replacement gas supplying device 150, or the supply of the replacement gas stops. The T-shaped joint 147, the oxidizing gas supplying pipe 148, the oxidizing gas supplying valve 149, the replacement gas supplying pipe 151 and the replacement gas supplying valve 152 constitute a selective gas supplying device 222. The inactive gas is used as the replacement gas. The inactive gas means a chemically inactive gas, and examples of the inactive gas are noble gases, such as helium, argon and neon, and nitrogen. Another example of the inactive gas in the present description is a gas (for example, a natural gas, a gas obtained by removing sulfur constituent from a city gas containing the natural gas as a major component, or the like) which is inactive under an operating environment of the fuel cell 101 and does not deteriorate the fuel cell 101. In the present embodiment, nitrogen is used as the inactive gas.
The fuel gas and the oxidizing gas supplied to the anode and cathode of the fuel cell 101 chemically react, and this chemical reaction generates electric power and heat (hereinafter referred to as "exhaust heat"). An excessive fuel gas which has not contributed to the chemical reaction is discharged from the anode to the fuel gas discharging passage 111, and is processed suitably. For example, the excessive fuel gas having been discharged from the fuel gas discharging passage 111 may be used as a fuel for heating a reformer of the hydrogen generator constituting the fuel gas supplying device 120, may be fuel-processed by a special burner, or may be suitably diluted and discharged to the atmosphere.
Moreover, the excessive oxidizing gas which has not contributed to the chemical reaction is discharged from the cathode through the oxidizing gas discharging passage 116 to the atmosphere.
Next, the operation of the fuel cell system 100 configured as above will be explained in detail in reference to Figs. 1 to 5. Herein, common operations are omitted, and characteristic operations will be explained.
First, operating modes of the fuel cell system 100 will be explained. The fuel cell system 100 includes: an electric power generating mode of generating electric power to supply the electric power to an external load; a start-up mode of transitioning from a stop state to the electric power generating mode; a stop mode of transitioning from the electric power generating mode to the stop state; and a stand-by mode. The stand-by mode is a mode in which the fuel cell system 100 stops the electric power generation and its associated operations by control of the control device 160. The stop state of the fuel cell system 100 includes both the stand-by mode and a state where the entire fuel cell system 100 including the control device 160 stops.
When starting up the fuel cell system 100 in a certain use state (start-up mode), the control device 160 opens the fuel gas discharging valve 112 and the fuel gas supplying valve 129, and closes the replacement gas supplying valve 132, among components configured to supply the fuel gas shown in Fig. 2. Moreover, the gas passage switching valve 125 switches such that the first port 125a communicates with the third port 125c. With this, as shown in Fig. 3, the fuel gas flows from the A end to B end of the fuel gas supplying manifold 106. Moreover, the control device 160 opens the oxidizing gas discharging valve 117 and the oxidizing gas supplying valve 149, and closes the replacement gas supplying valve 152, among components configured to supply the oxidizing gas shown in Fig. 4. Moreover, the gas passage switching valve 145 switches such that the first port 145a communicates with the third port 145c. With this, as shown in Fig. 5, the oxidizing gas flows from the A end to B end of the oxidizing gas supplying manifold 108. Thus, the control device 160 starts up the fuel cell system 100, and causes the fuel cell system 100 to transition to the electric power generating mode.
When stopping the fuel cell system 100 (stop mode) from the electric power generating mode, the control device 160 closes the fuel gas supplying valve 129, among the components configured to supply the fuel gas shown in Fig. 2. With this, the supply of the fuel gas stops. Next, the control device 160 switches the gas passage switching valve 125 such that the second port 125b communicates with the third port 125c, and the control device 160 opens the replacement gas supplying valve 132. With this, as shown in Fig. 3, the replacement gas flows from the B end to A end of the fuel gas supplying manifold 106. Thus, the fuel gas in the fuel gas passage 201 of the cell stack 102 is replaced with the replacement gas. After that, the control device 160 closes the replacement gas supplying valve 132 to stop supplying the replacement gas, and closes the fuel gas discharging valve 112. Thus, the replacement gas is sealed in the fuel gas passage 201 of the cell stack 102. Moreover, the control device 160 closes the oxidizing gas supplying valve 149, among the components configured to supply the oxidizing gas shown in Fig. 4. With this, the supply of the oxidizing gas stops. Next, the control device 160 switches the gas passage switching valve 145 such that the second port 145b communicates with the third port 145c, and the control device 160 opens the replacement gas supplying valve 152. With this, as shown in Fig. 5, the replacement gas flows from the B end to A end of the oxidizing gas supplying manifold 108. Thus, the oxidizing gas in the oxidizing gas passage 202 of the cell stack 102 is replaced with the replacement gas. After that, the control device 160 closes the replacement gas supplying valve 152 to stop supplying the replacement gas, and closes the oxidizing gas discharging valve 117. Thus, the replacement gas is sealed in the oxidizing gas passage 202 of the cell stack 102. In this manner, the control device 160 stops the fuel cell system 100, and maintains this state (stand-by mode).
Next, when starting up the fuel cell system 100 from the stand-by mode, the control device 160 opens the fuel gas discharging valve 112 and the fuel gas supplying valve 129, among the components configured to supply the fuel gas shown in Fig. 2. With this, as shown in Fig. 3, the fuel gas flows from the B end to A end of the fuel gas supplying manifold 106. Moreover, the control device 160 opens the oxidizing gas discharging valve 117 and the fuel gas supplying valve 149, among the components configured to supply the oxidizing gas shown in Fig. 4. With this, as shown in Fig. 5, the oxidizing gas flows from the B end to A end of the oxidizing gas supplying manifold 108. Thus, the control device 160 starts up the fuel cell system 100, and causes the fuel cell system 100 to transition to the electric power generating mode.

Next, when stopping the fuel cell system 100 from the electric power generating mode, the control device 160 closes the fuel gas supplying valve 129, among the components configured to supply the fuel gas shown in Fig. 2. With this, the supply of the fuel gas stops. Next, the control device 160 switches the gas passage switching valve 125 such that the first port 125a communicates with the third port 125c, and the control device 160 opens the replacement gas supplying valve 132. With this, as shown in Fig. 3, the replacement gas flows from the A end to B end of the fuel gas supplying manifold 106. Thus, the fuel gas in the fuel gas passage 201 of the cell stack 102 is replaced with the replacement gas. After that, the control device 160 closes the replacement gas supplying valve 132 to stop the replacement gas, and closes the fuel gas discharging valve 112. Thus, the replacement gas is sealed in the fuel gas passage 201 of the cell stack 102. Moreover, the control device 160 closes the oxidizing gas supplying valve 149, among the components configured to supply the oxidizing gas shown in Fig. 4. With this, the supply of the oxidizing gas stops. Next, the control device 160 switches the gas passage switching valve 145 such that the first port 145a communicates with the third port 145c, and the control device 160 opens the replacement gas supplying valve 152. With this, as shown in Fig. 5, the replacement gas flows from the A end to B end of the oxidizing gas supplying manifold 108. Thus, the oxidizing gas in the oxidizing gas passage 202 of the cell stack 102 is replaced with the replacement gas. After that, the control device 160 closes the replacement gas supplying valve 152 to stop supplying the replacement gas, and closes the oxidizing gas discharging valve 117. Thus, the replacement gas is sealed in the oxidizing gas passage 202 of the cell stack 102. In this manner, the control device 160 stops the fuel cell system 100, and maintains this state (stand-by mode).
Next, the fuel cell system 100 starts up from the stand-by mode. This start-up mode is carried out completely in the same manner as the above-described start-up mode in the certain use state. To be specific, hereinafter, the above-described series of operations are periodically repeated.

Next, effects of the present embodiment will be explained in comparison with Comparative Embodiment.

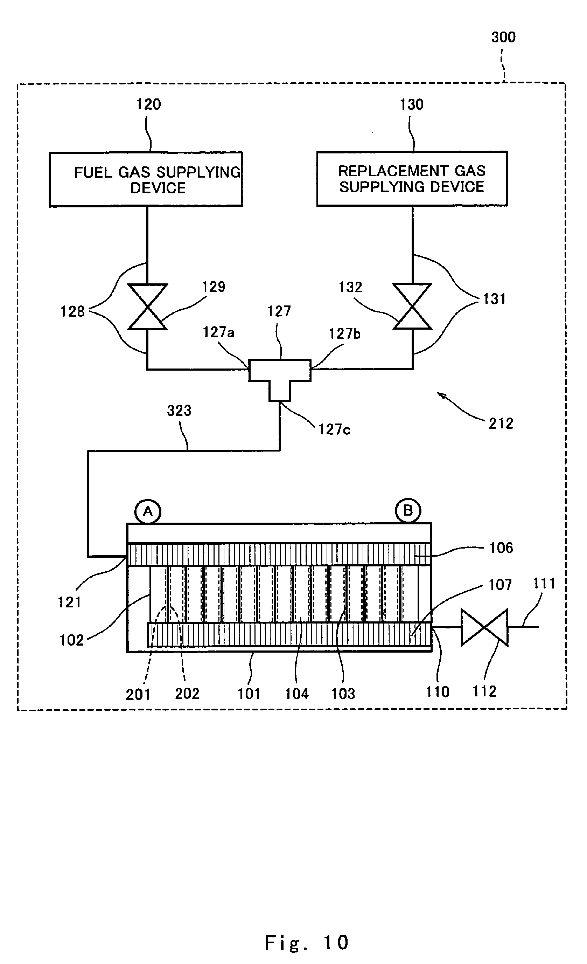

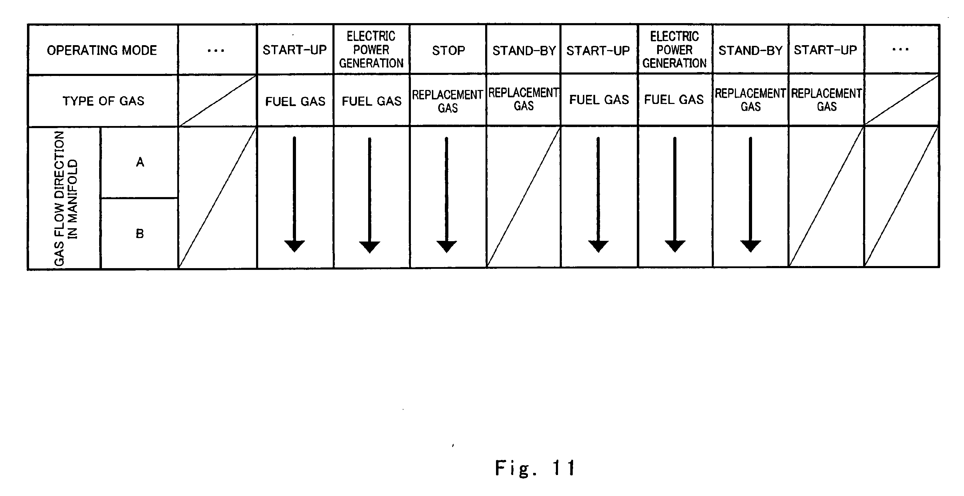

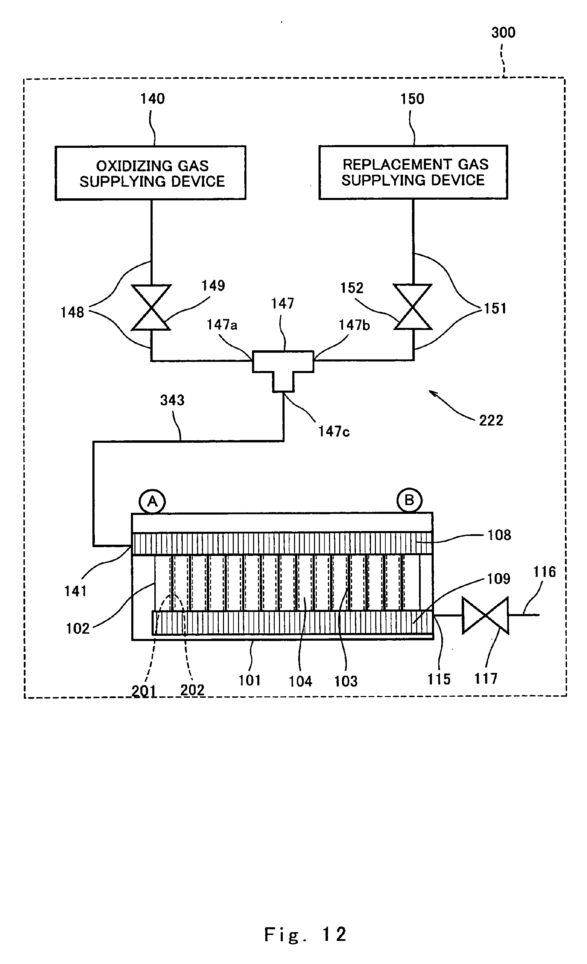

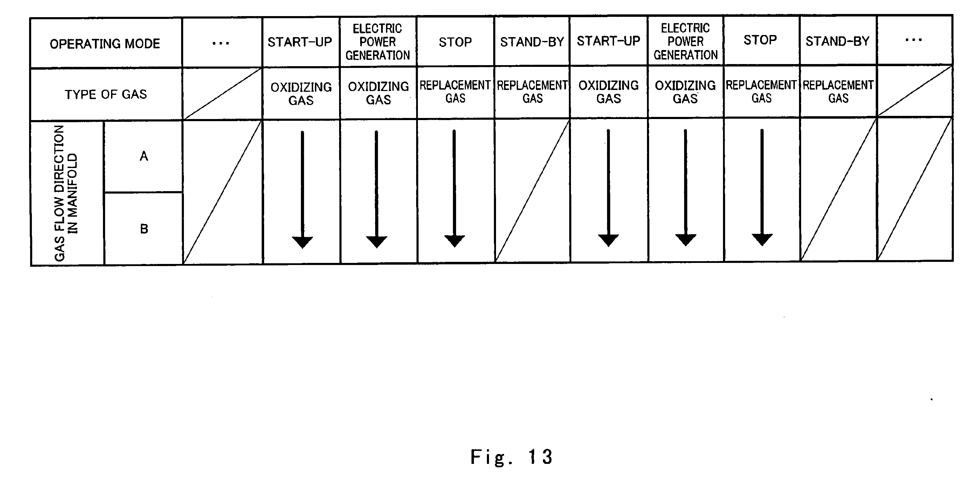

Fig. 10 is a partial block diagram showing components configured to supply the fuel gas, in a fuel cell system 300 of Comparative Embodiment. Fig. 11 is a diagram showing the flow direction of the fuel gas in the fuel gas supplying manifold 106 that is a component of the fuel cell system 300 of Fig. 10. Fig. 12 is a partial block diagram showing components configured to supply the oxidizing gas, in the fuel cell system 300 of Comparative Embodiment. Fig. 13 is a diagram showing the flow direction of the oxidizing gas in the oxidizing gas supplying manifold 108 that is a component of the fuel cell system 300 of Fig. 12. In Figs. 10 and 12, same reference numbers are used for members similar to or corresponding to the members shown in Figs. 2 and 4, and explanations thereof are omitted.
As shown in Fig. 10, the fuel cell system 300 of Comparative Embodiment is provided with only the fuel gas inlet 121 which communicates with the A end of the fuel gas supplying manifold 106, and is not provided with the fuel gas inlet which communicates with the B end of the fuel gas supplying manifold 106. Moreover, as shown in Fig. 12, the fuel cell system 300 of Comparative Embodiment is provided with only the oxidizing gas inlet 141 which communicates with the A end of the oxidizing gas supplying manifold 108, and is not provided with the oxidizing gas inlet which communicates with the B end of the oxidizing gas supplying manifold 108. Therefore, the flow directions of the reactant gas and the replacement gas in the reactant gas supplying manifolds 106 and 108 are constant. Components other than these are the same as those of the fuel cell system 100 of Embodiment 1.
Specifically, as shown in Fig. 10, the fuel gas inlet 121 is connected to a first end of a fuel gas supplying pipe 323 as the fuel gas supplying passage 122. A second end of the fuel gas supplying pipe 323 is connected to the outlet 127c of the T-shaped joint 127.

Moreover, as shown in Fig. 12, the oxidizing gas inlet 141 is connected to a first end of an oxidizing gas supplying pipe 343 as the oxidizing gas supplying passage 142. A second end of the oxidizing gas supplying pipe 343 is connected to the outlet 147c of the T-shaped joint 147.

Next, an outline of the operation of the fuel cell system 300 configured as above will be explained in reference to Figs. 10 to 13.

When starting up the fuel cell system 300 in a certain use state (start-up mode), the control device 160 opens the fuel gas discharging valve 112 and the fuel gas supplying valve 129, and closes the replacement gas supplying valve 132, among the components configured to supply the fuel gas shown in Fig. 10. With this, as shown in Fig. 11, the fuel gas flows from the A end to B end of the fuel gas supplying manifold 106. Moreover, the control device 160 opens the oxidizing gas discharging valve 117 and the oxidizing gas supplying valve 149, and closes the replacement gas supplying valve 152, among the components configured to supply the oxidizing gas shown in Fig. 12. With this, as shown in Fig. 13, the oxidizing gas flows from the A end to B end of the oxidizing gas supplying manifold 108. In this manner, the control device 160 starts up the fuel cell system 300, and causes the fuel cell system 300 to transition to the electric power generating mode.

When stopping the fuel cell system 100 (stop mode) from the electric power generating mode, the control device 160 closes the fuel gas supplying valve 129, among the components configured to supply the fuel gas shown in Fig. 10. With this, the supply of the fuel gas stops. Next, the control device 160 opens the replacement gas supplying valve 132. With this, as shown in Fig. 11, the replacement gas flows from the A end to B end of the fuel gas supplying manifold 106. Thus, the fuel gas in the fuel gas passage 201 of the cell stack 102 is replaced with the replacement gas. After that, the control device 160 closes the replacement gas supplying valve 132 to stop supplying the replacement gas, and closes the fuel gas discharging valve 112. Thus, the replacement gas is sealed in the fuel gas passage 201 of the cell stack 102. Moreover, the control device 160 closes the oxidizing gas supplying valve 149, among the components configured to supply the oxidizing gas shown in Fig. 12. With this, the supply of the oxidizing gas stops. Next, the control device 160 opens the replacement gas supplying valve 152. With this, as shown in Fig. 13, the replacement gas flows from the A end to B end of the oxidizing gas supplying manifold 108. Thus, the oxidizing gas in the oxidizing gas passage 202 of the cell stack 102 is replaced with the replacement gas. After that, the control device 160 closes the replacement gas supplying valve 152 to stop supplying the replacement gas, and closes the oxidizing gas discharging valve 117. Thus, the replacement gas is sealed in the oxidizing gas passage 202 of the cell stack 102. In this manner, the control device 160 stops the fuel cell system 300, and maintains this state (stand-by mode). Hereinafter, the above-described series of operations are periodically repeated.
The fuel cell system 300 of Comparative Embodiment is provided with the single fuel gas inlet 121 which communicates with the fuel gas supplying manifold 106. Moreover, the fuel cell system 300 of Comparative Embodiment is provided with the single oxidizing gas inlet 141 which communicates with the oxidizing gas supplying manifold 108. Therefore, when repeating the electric power generating mode and stop mode of the fuel cell system 300 as shown in Figs. 11 and 13, the flow directions of the reactant gas and the replacement gas in the reactant gas supplying manifolds 106 and 108 are constant directions from the A end to the B end. Therefore, it is thought that gas replacement states differ between the cells close to the reactant gas inlets 121 and 141 and the cells far from the reactant gas inlets 121 and 141, so that the concentrations of the reactant gas and replacement gas become non-uniform among the cells.
In contrast, the fuel cell system 100 of Embodiment 1 of the present invention changes the flow directions of the fuel gas and the replacement gas between the A end and B end of the fuel gas supplying manifold 106 for each cycle including the stop mode, the start-up mode and the electric power generating mode. Moreover, the fuel cell system 100 of Embodiment 1 of the present invention changes the flow directions of the oxidizing gas and the replacement gas between the A end and B end of the oxidizing gas supplying manifold 108 for each cycle including the stop mode, the start-up mode and the electric power generating mode.

Therefore, in the fuel cell system 100 of the present embodiment, the gas replacement states hardly differ between the cells close to the reactant gas inlets 121A, 121B, 141A and 141B and the cells far from the reactant gas inlets 121A, 121B, 141A and 141B. As a result, the concentrations of the reactant gas and the replacement gas become uniform among the cells of the cell stack 102. Therefore, even if the fuel cell system 100 repeatedly starts up and stops, the decrease of the electric power generating performance of the entire cell stack 102 is suppressed.

Moreover, in the fuel cell system 100 of the present embodiment, the fuel gas inlet selecting device 211 is constituted of the gas passage switching valve (three-way valve) 125, the A-side fuel gas supplying pipe 123A and the B-side fuel gas supplying pipe 123B. Moreover, in the fuel cell system 100 of the present embodiment, the oxidizing gas inlet selecting device 221 is constituted of the gas passage switching valve (three-way valve) 145, the A-side oxidizing gas supplying pipe 143A and the B-side oxidizing gas supplying pipe 143B.

Therefore, without complicating the configuration of the fuel cell system, a destination to which the fuel gas is supplied can be switched between the A-side fuel gas inlet 121A and the B-side fuel gas inlet 121B. Moreover, without complicating the configuration of the fuel cell system, a destination to which the oxidizing gas is supplied can be switched between the A-side oxidizing gas inlet 141A and the B-side oxidizing gas inlet 141B.

### Embodiment 2

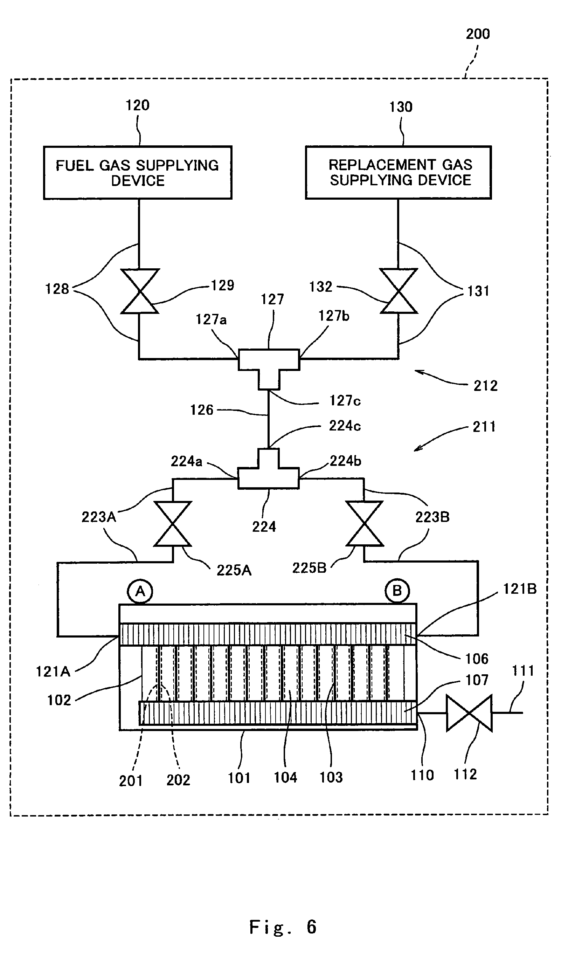

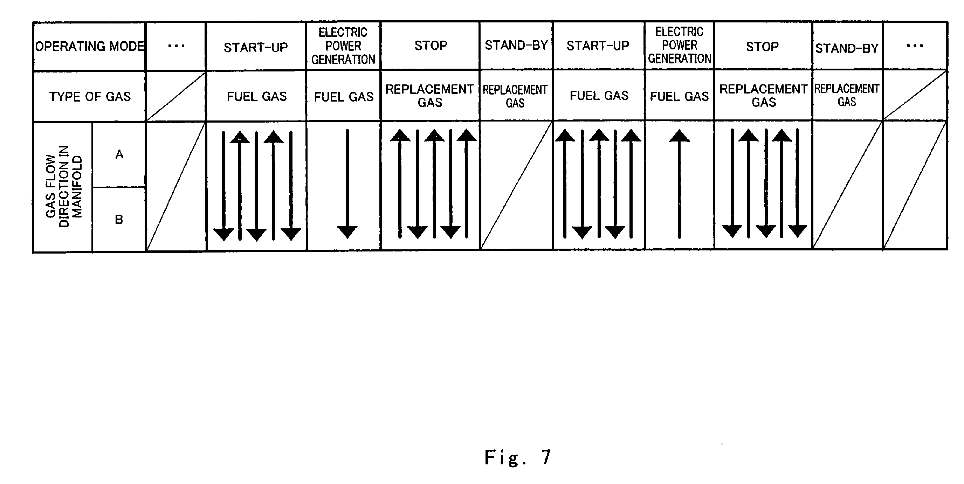

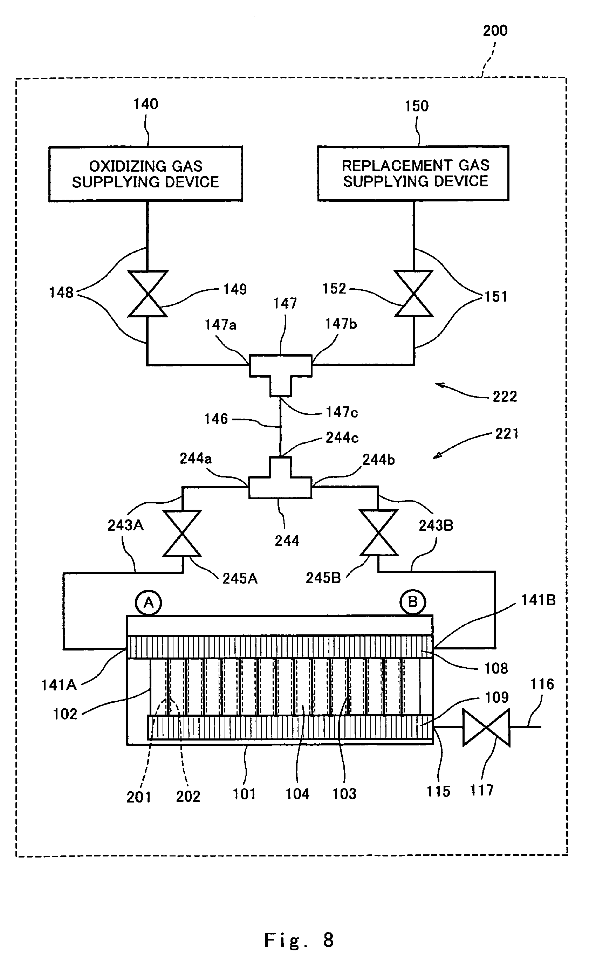

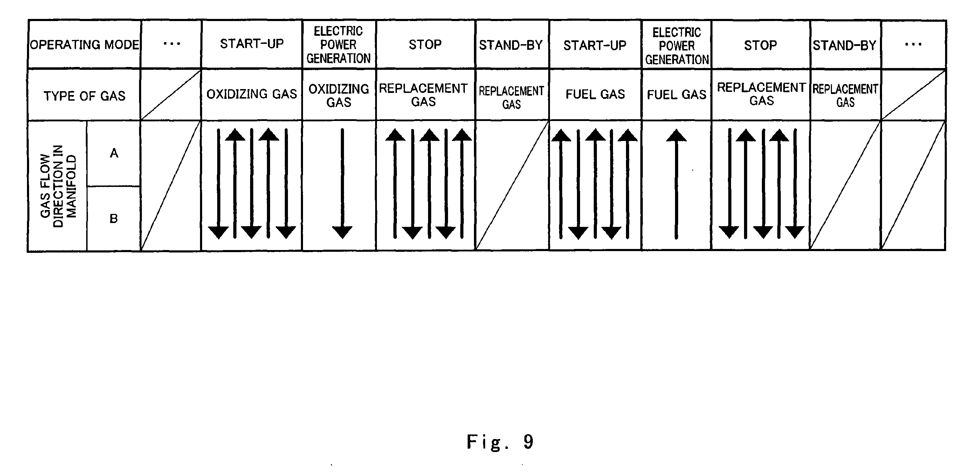

Fig. 6 is a partial block diagram showing components configured to supply the fuel gas, in a fuel cell system 200 of the present embodiment. Fig. 7 is a diagram showing the flow direction of the fuel gas in the fuel gas supplying manifold 106 that is a component of the fuel cell system 200 of Fig. 6. Fig. 8 is a partial block diagram showing components configured to supply the oxidizing gas, in the fuel cell system 200 of the present embodiment. Fig. 9 is a diagram showing the flow direction of the oxidizing gas in the oxidizing gas supplying manifold 108 that is a component of the fuel cell system 200 of Fig. 8. In Figs. 6 and 8, same reference numbers are used for members similar to or corresponding to the members shown in Figs. 2 and 4, and explanations thereof are omitted.

In the fuel cell system 200 of the present embodiment, a T-shaped joint 224, an A-side fuel gas supplying valve 225A and a B-side fuel gas supplying valve 225B are used instead of the gas passage switching valve 125 of Fig. 2. Moreover, in the fuel cell system 200 of the present embodiment, a T-shaped joint 244, an A-side oxidizing gas supplying valve 245A and a B-side oxidizing gas supplying valve 245B are used instead of the gas passage switching valve 145 of Fig. 4. Further, the purge of the gas in the cell stack 102 in the stop mode and the start-up mode is carried out by changing the flow directions of the reactant gas and the replacement gas. Other than these, the fuel cell system 200 of the present embodiment is the same as the fuel cell system 100 of Embodiment 1.

Specifically, as shown in Fig. 6, the A-side fuel gas inlet 121A of the fuel cell 101 is connected to a first end of an A-side fuel gas supplying pipe 223A as the fuel gas supplying passage 122. The A-side fuel gas supplying valve 225A is disposed on a portion of the A-side fuel gas supplying pipe 223A. Meanwhile, the B-side fuel gas inlet 121B of the fuel cell 101 is connected to a first end of a B-side fuel gas supplying pipe 223B as the fuel gas supplying passage 122. The B-side fuel gas supplying valve 225B is disposed on a portion of the B-side fuel gas supplying pipe 223B.

A second end of the A-side fuel gas supplying pipe 223A is connected to a first outlet 224a of the T-shaped joint 224. A second end of the B-side fuel gas supplying pipe 223B is connected to a second outlet 224b of the T-shaped joint 224. An inlet 244c of the T-shaped joint 224 is connected to the outlet 127c of the T-shaped joint 127 via the fuel gas supplying pipe 126 as the fuel gas supplying passage 122. The T-shaped joint 224, the A-side fuel gas supplying pipe 223A, the A-side fuel gas supplying valve 225A, the B-side fuel gas supplying pipe 223B and the B-side fuel gas supplying valve 225B constitute the fuel gas inlet selecting device 211.

Moreover, as shown in Fig. 8, the A-side oxidizing gas inlet 141A of the fuel cell 101 is connected to a first end of an A-side oxidizing gas supplying pipe 243A as the oxidizing gas supplying passage 142. The A-side oxidizing gas supplying valve 245A is disposed on a portion of the A-side oxidizing gas supplying pipe 243A. Meanwhile, the B-side oxidizing gas inlet 141B of the fuel cell 101 is connected to a first end of a B-side oxidizing gas supplying pipe 243B as the oxidizing gas supplying passage 142. The B-side oxidizing gas supplying valve 245B is disposed on a portion of the B-side oxidizing gas supplying pipe 243B.

A second end of the A-side oxidizing gas supplying pipe 243A is connected to a first outlet 244a of the T-shaped joint 244. A second end of the B-side oxidizing gas supplying pipe 243B is connected to a second outlet 244b of the T-shaped joint 244. The inlet 244c of the T-shaped joint 244 is connected to the outlet 147c of the T-shaped joint 147 via the oxidizing gas supplying pipe 146 as the oxidizing gas supplying passage 142. The T-shaped joint 244, the A-side fuel gas supplying pipe 243A, the A-side fuel gas supplying valve 245A, the B-side fuel gas supplying pipe 243B and the B-side fuel gas supplying valve 245B constitute the oxidizing gas inlet selecting device 221.

Next, the operation of the fuel cell system 200 configured as above will be explained in detail in reference to Figs. 6 to 9. Herein, common operations are omitted, and characteristic operations will be explained.

When starting up the fuel cell system 200 in a certain use state (start-up mode), the control device 160 opens the fuel gas discharging valve 112, the A-side fuel gas supplying valve 225A and the fuel gas supplying valve 129, and closes the replacement gas supplying valve 132, among the components configured to supply the fuel gas shown in Fig. 6. With this, fuel gas flows from the A end to B end of the fuel gas supplying manifold 106. Next, the control device 160 opens the B-side fuel gas supplying valve 225B, and closes the A-side fuel gas supplying valve 225A. With this, the fuel gas flows from the B end to A end of the fuel gas supplying manifold 106. Next, the control device 160 opens the A-side fuel gas supplying valve 225A, and closes the B-side fuel gas supplying valve 225B. With this, the fuel gas flows from the A end to B end of the fuel gas supplying manifold 106. Next, the control device 160 opens the B-side fuel gas supplying valve 225B, and closes the A-side fuel gas supplying valve 225A. With this, the fuel gas flows from the B end to A end of the fuel gas supplying manifold 106. Next, the control device 160 opens the A-side fuel gas supplying valve 225A, and closes the B-side fuel gas supplying valve 225B. With this, the fuel gas flows from the A end to B end of the fuel gas supplying manifold 106. That is, as shown in Fig. 7, during the single start-up mode, the flow direction of the fuel gas in the fuel gas supplying manifold 106 is changed four times in total.

Meanwhile, the control device 160 opens the oxidizing gas discharging valve 117, the A-side oxidizing gas supplying valve 245A and the oxidizing gas supplying valve 149, and closes the replacement gas supplying valve 152, among the components configured to supply the oxidizing gas of Fig. 8. With this, the oxidizing gas flows from the A end to B end of the oxidizing gas supplying manifold 108. Next, the control device 160 opens the B-side oxidizing gas supplying valve 245B, and closes the A-side oxidizing gas supplying valve 245A. With this, the oxidizing gas flows from the B end to A end of the oxidizing gas supplying manifold 108. Next, the control device 160 opens the A-side oxidizing gas supplying valve 245A, and closes the B-side oxidizing gas supplying valve 245B. With this, the oxidizing gas flows from the A end to B end of the oxidizing gas supplying manifold 108. Next, the control device 160 opens the B-side oxidizing gas supplying valve 245B, and closes the A-side oxidizing gas supplying valve 245A. With this, the oxidizing gas flows from the B end to A end of the oxidizing gas supplying manifold 108. Next, the control device 160 opens the A-side oxidizing gas supplying valve 245A, and closes the B-side oxidizing gas supplying valve 245B. With this, the oxidizing gas flows from the A end to B end of the oxidizing gas supplying manifold 108. That is, as shown in Fig. 9, during the single start-up mode, the flow direction of the oxidizing gas in the oxidizing gas supplying manifold 108 is changed four times in total.

In this manner, the control device 160 starts up the fuel cell system 200, and causes the fuel cell system 200 to transition to the electric power generating mode.

When stopping the fuel cell system 200 (stop mode) from the electric power generating mode, the control device 160 closes the fuel gas supplying valve 129 and the A-side fuel gas supplying valve 225A, among the components configured to supply the fuel gas shown in Fig. 6. With this, the supply of the fuel gas stops. Next, the control device 160 opens the B-side fuel gas supplying valve 225B and the replacement gas supplying valve 132. With this, the replacement gas flows from the B end to A end of the fuel gas supplying manifold 106. Next, the control device 160 opens the A-side fuel gas supplying valve 225A, and closes the B-side fuel gas supplying valve 225B. With this, the replacement gas flows from the A end to B end of the fuel gas supplying manifold 106. Next, the control device 160 opens the B-side fuel gas supplying valve 225B, and closes the A-side fuel gas supplying valve 225A. With this, the replacement gas flows from the B end to A end of the fuel gas supplying manifold 106. Next, the control device 160 opens the A-side fuel gas supplying valve 225A, and closes the B-side fuel gas supplying valve 225B. With this, the replacement gas flows from the A end to B end of the fuel gas supplying manifold 106. Next, the control device 160 opens the B-side fuel gas supplying valve 225B, and closes the A-side fuel gas supplying valve 225A. With this, the replacement gas flows from the B end to A end of the fuel gas supplying manifold 106. That is, as shown in Fig. 7, during the single stop mode, the flow direction of the replacement gas in the fuel gas supplying manifold 106 is changed four times in total. Thus, the fuel gas in the fuel gas passage 201 of the cell stack 102 is replaced with the replacement gas. After that, the control device 160 closes the replacement gas supplying valve 132 to stop supplying the replacement gas, and closes the fuel gas discharging valve 112. Thus, the replacement gas is sealed in the fuel gas passage 201 of the cell stack 102.

Meanwhile, the control device 160 closes the oxidizing gas supplying valve 149 and the A-side oxidizing gas supplying valve 245A, among the components configured to supply the oxidizing gas shown in Fig. 8. With this, the supply of the oxidizing gas stops. Next, the control device 160 opens the B-side oxidizing gas supplying valve 245B and the replacement gas supplying valve 152. With this, the replacement gas flows from the B end to A end of the oxidizing gas supplying manifold 108. Next, the control device 160 opens the A-side oxidizing gas supplying valve 245A, and closes the B-side oxidizing gas supplying valve 245B. With this, the replacement gas flows from the A end to B end of the oxidizing gas supplying manifold 108. Next, the control device 160 opens the B-side oxidizing gas supplying valve 245B, and closes the A-side oxidizing gas supplying valve 245A. With this, the replacement gas flows from the B end to A end of the oxidizing gas supplying manifold 108. Next, the control device 160 opens the A-side oxidizing gas supplying valve 245A, and closes the B-side oxidizing gas supplying valve 245B. With this, the replacement gas flows from the A end to B end of the oxidizing gas supplying manifold 108. Next, the control device 160 opens the B-side oxidizing gas supplying valve 245B, and closes the A-side oxidizing gas supplying valve 245A. With this, the replacement gas flows from the B end to A end of the oxidizing gas supplying manifold 108. That is, as shown in Fig. 9, during the single stop mode, the flow direction of the replacement gas in the oxidizing gas supplying manifold 108 is changed four times in total. Thus, the oxidizing gas in the oxidizing gas passage 202 of the cell stack 102 is replaced with the replacement gas. After that, the control device 160 closes the replacement gas supplying valve 152 to stop supplying the replacement gas, and closes the oxidizing gas discharging valve 117. Thus, the replacement gas is sealed in the oxidizing gas passage 202 of the cell stack 102.

In this manner, the control device 160 stops the fuel cell system 200, and maintains this state (stand-by mode).

Next, when starting up the fuel cell system 200 from the stand-by mode, the control device 160 opens the fuel gas discharging valve 112 and the fuel gas supplying valve 129. With this, the fuel gas flows from the B end to A end of the fuel gas supplying manifold 106. Next, the control device 160 opens the A-side fuel gas supplying valve 225A, and closes the B-side fuel gas supplying valve 225B. With this, the fuel gas flows from the A end to B end of the fuel gas supplying manifold 106. Next, the control device 160 opens the B-side fuel gas supplying valve 225B, and closes the A-side fuel gas supplying valve 225A. With this, the fuel gas flows from the B end to A end of the fuel gas supplying manifold 106. Next, the control device 160 opens the A-side fuel gas supplying valve 225A, and closes the B-side fuel gas supplying valve 225B. With this, the fuel gas flows from the A end to B end of the fuel gas supplying manifold 106. Next, the control device 160 opens the B-side fuel gas supplying valve 225B, and closes the A-side fuel gas supplying valve 225A. With this, the fuel gas flows from the B end to A end of the fuel gas supplying manifold 106. That is, as shown in Fig. 7, during the single start-up mode, the flow direction of the fuel gas in the fuel gas supplying manifold 106 is changed four times in total.

Meanwhile, the control device 160 opens the oxidizing gas discharging valve 117 and the oxidizing gas supplying valve 149. With this, the oxidizing gas flows from the B end to A end of the oxidizing gas supplying manifold 108. Next, the control device 160 opens the A-side oxidizing gas supplying valve 245A, and closes the B-side oxidizing gas supplying valve 245B. With this, the oxidizing gas flows from the A end to B end of the oxidizing gas supplying manifold 108. Next, the control device 160 opens the B-side oxidizing gas supplying valve 245B, and closes the A-side oxidizing gas supplying valve 245A. With this, the oxidizing gas flows from the B end to A end of the oxidizing gas supplying manifold 108. Next, the control device 160 opens the A-side oxidizing gas supplying valve 245A, and closes the B-side oxidizing gas supplying valve 245B. With this, the oxidizing gas flows from the A end to B end of the oxidizing gas supplying manifold 108. Next, the control device 160 opens the B-side oxidizing gas supplying valve 245B, and closes the A-side oxidizing gas supplying valve 245A. With this, the oxidizing gas flows from the B end to A end of the oxidizing gas supplying manifold 108. That is, as shown in Fig. 9, during the single start-up mode, the flow direction of the oxidizing gas in the oxidizing gas supplying manifold 108 is changed four times in total.

In this manner, the control device 160 starts up the fuel cell system 200, and causes the fuel cell system 200 to transition to the electric power generating mode.

When stopping the fuel cell system 200 from the electric power generating mode, the control device 160 closes the fuel gas supplying valve 129 and the B-side fuel gas supplying valve 225B. With this, the supply of the fuel gas stops. Next, the control device 160 opens the A-side fuel gas supplying valve 225A and the replacement gas supplying valve 132. With this, the replacement gas flows from the A end to B end of the fuel gas supplying manifold 106. Next, the control device 160 opens the B-side fuel gas supplying valve 225B, and closes the A-side fuel gas supplying valve 225A. With this, the replacement gas flows from the B end to A end of the fuel gas supplying manifold 106. Next, the control device 160 opens the A-side fuel gas supplying valve 225A, and closes the B-side fuel gas supplying valve 225B. With this, the replacement gas flows from the A end to B end of the fuel gas supplying manifold 106. Next, the control device 160 opens the B-side fuel gas supplying valve 225B, and closes the A-side fuel gas supplying valve 225A. With this, the replacement gas flows from the B end to A end of the fuel gas supplying manifold 106. Next, the control device 160 opens the A-side fuel gas supplying valve 225A, and closes the B-side fuel gas supplying valve 225B. With this, the replacement gas flows from the A end to B end of the fuel gas supplying manifold 106. That is, as shown in Fig. 7, during the single stop mode, the flow direction of the replacement gas in the fuel gas supplying manifold 106 is changed four times in total. Thus, the fuel gas in the fuel gas passage 201 of the cell stack 102 is replaced with the replacement gas. After that, the control device 160 closes the replacement gas supplying valve 132 to stop supplying the replacement gas, and closes the fuel gas discharging valve 112. Thus, the replacement gas is sealed in the fuel gas passage 201 of the cell stack 102.

Meanwhile, the control device 160 closes the oxidizing gas supplying valve 149 and the B-side oxidizing gas supplying valve 245B. With this, the supply of the oxidizing gas stops. Next, the control device 160 opens the A-side oxidizing gas supplying valve 245A and the replacement gas supplying valve 152. With this, the replacement gas flows from the A end to B end of the oxidizing gas supplying manifold 108. Next, the control device 160 opens the B-side oxidizing gas supplying valve 245B, and closes the A-side oxidizing gas supplying valve 245A. With this, the replacement gas flows from the B end to A end of the oxidizing gas supplying manifold 108. Next, the control device 160 opens the A-side oxidizing gas supplying valve 245A, and closes the B-side oxidizing gas supplying valve 245B. With this, the replacement gas flows from the A end to B end of the oxidizing gas supplying manifold 108. Next, the control device 160 opens the B-side oxidizing gas supplying valve 245B, and closes the A-side oxidizing gas supplying valve 245A. With this, the replacement gas flows from the B end to A end of the oxidizing gas supplying manifold 108. Next, the control device 160 opens the A-side oxidizing gas supplying valve 245A, and closes the B-side oxidizing gas supplying valve 245B. With this, the replacement gas flows from the A end to B end of the oxidizing gas supplying manifold 108. That is, as shown in Fig. 9, during the single stop mode, the flow direction of the replacement gas in the oxidizing gas supplying manifold 108 is changed four times in total. Thus, the oxidizing gas in the oxidizing gas passage 202 of the cell stack 102 is replaced with the replacement gas. After that, the control device 160 closes the replacement gas supplying valve 152 to stop supplying the replacement gas, and closes the oxidizing gas discharging valve 117. Thus, the replacement gas is sealed in the oxidizing gas passage 202 of the cell stack 102.

In this manner, the control device 160 stops the fuel cell system 200, and maintains this state (stand-by mode).

Next, the fuel cell system 200 starts up from the stand-by mode. This start-up mode is carried out completely in the same manner as the above-described start-up mode in the certain use state. To be specific, hereinafter, the above-described series of operations are periodically repeated.

The fuel cell system 200 of Embodiment 2 of the present invention changes the flow directions of the fuel gas and the replacement gas between the A end and B end of the fuel gas supplying manifold 106 for each cycle including the stop mode, the start-up mode and the electric power generating mode, and in addition, for each of the start-up modes and the stop modes. Moreover, the fuel cell system 200 of Embodiment 2 of the present invention changes the flow directions of the oxidizing gas and the replacement gas between the A end and B end of the oxidizing gas supplying manifold 108 in a similar manner.

Therefore, in the fuel cell system 200 of the present embodiment, the gas replacement states hardly differ between the cells close to the reactant gas inlets 121A, 121B, 141A and 141B and the cells far from the reactant gas inlets 121A, 121B, 141A and 141B. As a result, the concentrations of the reactant gas and the replacement gas become uniform among the cells of the cell stack 102. Therefore, even if the fuel cell system 200 repeatedly starts up and stops, the decrease of the electric power generating performance of the entire cell stack 102 is further suppressed.

Moreover, in the fuel cell system 200 of the present embodiment, the fuel gas inlet selecting device 211 is constituted of the T-shaped joint 244, the A-side fuel gas supplying pipe 243A, the A-side fuel gas supplying valve 245A, the B-side fuel gas supplying pipe 243B and the B-side fuel gas supplying valve 245B. Further, in the fuel cell system 200 of the present embodiment, the oxidizing gas inlet selecting device 221 is constituted of the T-shaped joint 244, the A-side fuel gas supplying pipe 243A, the A-side fuel gas supplying valve 245A, the B-side fuel gas supplying pipe 243B and the B-side fuel gas supplying valve 245B.

Therefore, it becomes easy to instantly change the flow directions of the reactant gas and the replacement gas.

### Modification Example (Modification Example of Embodiment 1)

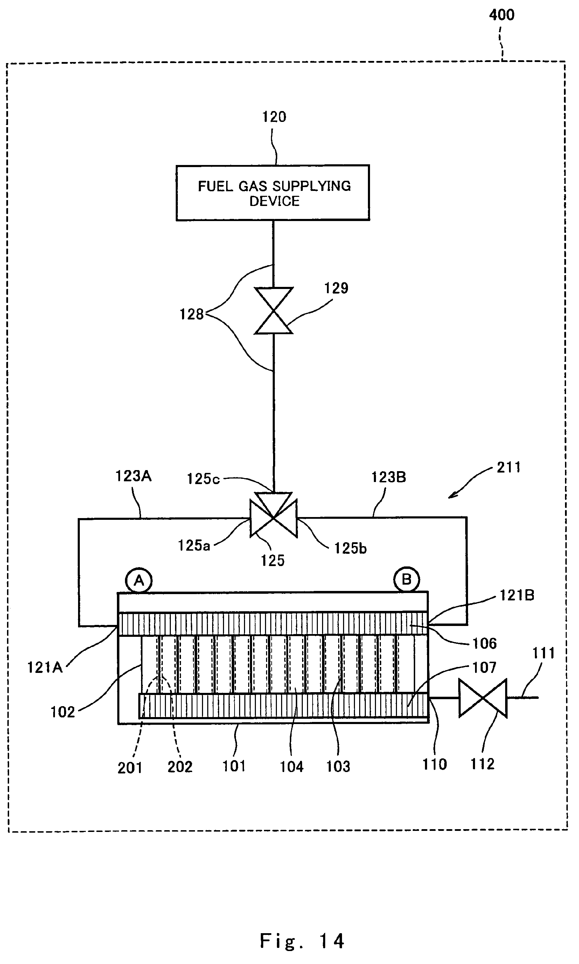

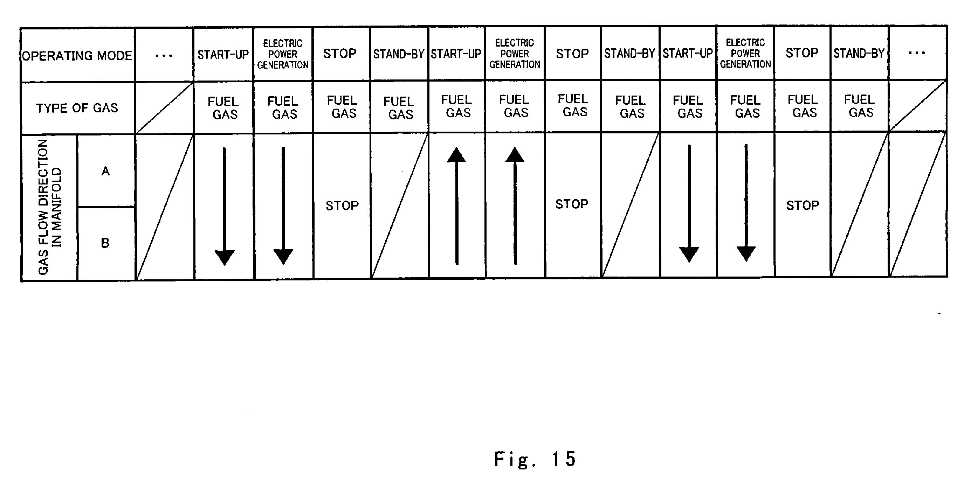

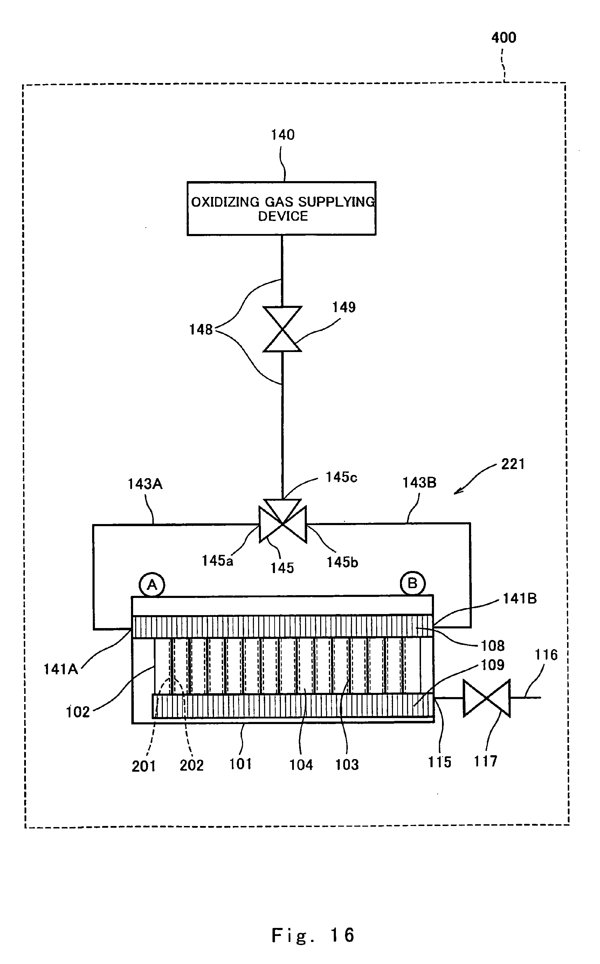

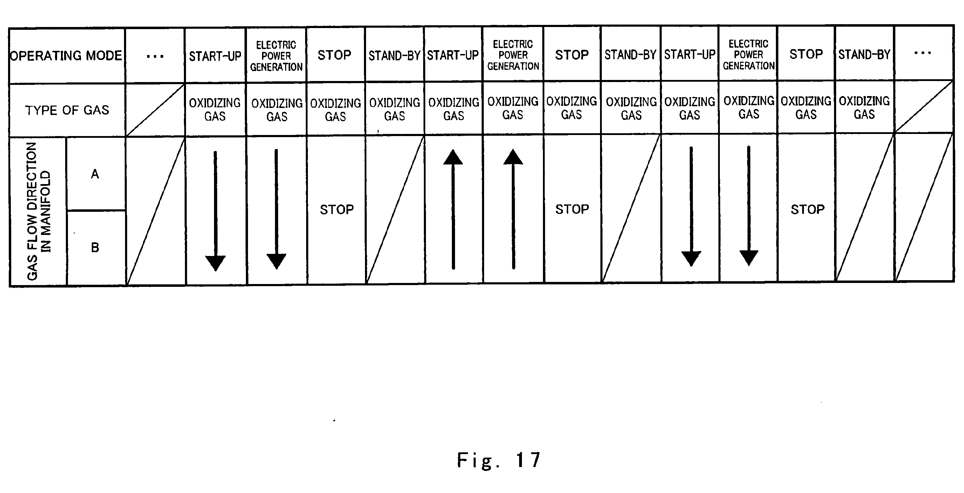

Fig. 14 is a partial block diagram showing components configured to supply the fuel gas, in the fuel cell system of Modification Example of the present invention. Fig. 15 is a diagram showing the flow direction of the fuel gas in the fuel gas supplying manifold of the fuel cell system of Fig. 14. Fig. 16 is a partial block diagram showing components configured to supply the oxidizing gas, in the fuel cell system of Modification Example of the present invention. Fig. 17 is a diagram showing the flow direction of the oxidizing gas in the oxidizing gas supplying manifold of the fuel cell system of Fig. 16.

In a fuel cell system 400 of Modification Example, the components configured to supply the fuel gas and the components configured to supply the oxidizing gas in Embodiment 1 are changed.

To be specific, as shown in Fig. 14, the components configured to supply the fuel gas do not include components for the replacement gas. Specifically, the fuel gas supplying device 120 is directly connected to the third port 125c of the gas passage switching valve 125 via the fuel gas supplying pipe 128. Other than this, components in the fuel cell system 400 are the same as the components (shown in Fig. 2) configured to supply the fuel gas in Embodiment 1.
Moreover, as shown in Fig. 16, the components configured to supply the oxidizing gas do not include components for the replacement gas. Specifically, the oxidizing gas supplying device 140 is directly connected to the third port 145c of the gas passage switching valve 145 via the oxidizing gas supplying pipe 148. Other than this, components in the fuel cell system 400 are the same as the components (shown in Fig. 4) configured to supply the oxidizing gas in Embodiment 1.
Next, the operation of the fuel cell system 400 configured as above will be explained in detail in reference to Figs. 14 to 17. Herein, common operations are omitted, and characteristic operations will be explained.
When starting up the fuel cell system 400 in a certain use state (start-up mode), among the components configured to supply the fuel gas shown in Fig. 14, the control device 160 switches the gas passage switching valve 125 such that the first port 125a communicates with the third port 125c, and the control device 160 opens the fuel gas discharging valve 112 and the fuel gas supplying valve 129. With this, as shown in Fig. 15, the fuel gas flows from the A end to B end of the fuel gas supplying manifold 106. Moreover, among the components configured to supply the oxidizing gas shown in Fig. 16, the control device 160 switches the gas passage switching valve 145 such that the first port 145a communicates with the third port 145c, and the control device 160 opens the oxidizing gas discharging valve 117 and the oxidizing gas supplying valve 149. With this, as shown in Fig. 17, the oxidizing gas flows from the A end to B end of the oxidizing gas supplying manifold 108. In this manner, the control device 160 starts up the fuel cell system 400, and causes the fuel cell system 400 to transition to the electric power generating mode.

When stopping the fuel cell system 400 (stop mode) from the electric power generating mode, the control device 160 closes the fuel gas supplying valve 129 and the fuel gas discharging valve 112, among the components configured to supply the fuel gas shown in Fig. 14. With this, as shown in Fig. 15, the supply of the fuel gas stops, and the fuel gas is sealed in the fuel gas passage 201 of the cell stack 102. Moreover, the control device 160 closes the oxidizing gas supplying valve 149 and the oxidizing gas discharging valve 117, among the components configured to supply the oxidizing gas shown in Fig. 16. With this, as shown in Fig. 17, the supply of the oxidizing gas stops, and the oxidizing gas is sealed in the oxidizing gas passage 202 of the cell stack 102. In this manner, the control device 160 stops the fuel cell system 400, and maintains this state (stand-by mode).

Next, when starting up the fuel cell system 400 from the stand-by mode, among the components configured to supply the fuel gas shown in Fig. 14, the control device 160 switches the gas passage switching valve 125 such that the second port 125b communicates with the third port 125c, and the control device 160 opens the fuel gas discharging valve 112 and the fuel gas supplying valve 129. With this, as shown in Fig. 15, the fuel gas flows from the B end to A end of the fuel gas supplying manifold 106. Moreover, among the components configured to supply the oxidizing gas shown in Fig. 16, the control device 160 switches the gas passage switching valve 145 such that the second port 145b communicates with the third port 145c, and the control device 160 opens the oxidizing gas discharging valve 117 and the oxidizing gas supplying valve 149. With this, as shown in Fig. 17, the oxidizing gas flows from the B end to A end of the oxidizing gas supplying manifold 108. In this manner, the control device 160 starts up the fuel cell system 400, and causes the fuel cell system 400 to transition to the electric power generating mode.

Next, when stopping the fuel cell system 400 from the electric power generating mode, the control device 160 closes the fuel gas supplying valve 129 and the fuel gas discharging valve 112, among the components configured to supply the fuel gas shown in Fig. 14. With this, as shown in Fig. 15, the supply of the fuel gas stops, and the fuel gas is sealed in the fuel gas passage 201 of the cell stack 102. Moreover, the control device 160 closes the oxidizing gas supplying valve 149 and the oxidizing gas discharging valve 117, among the components configured to supply the oxidizing gas shown in Fig. 16. With this, as shown in Fig. 17, the supply of the oxidizing gas stops, and the oxidizing gas is sealed in the oxidizing gas passage 202 of the cell stack 102. In this manner, the control device 160 stops the fuel cell system 400, and maintains this state (stand-by mode).

Next, the fuel cell system 400 starts up from the stand-by mode. This start-up mode is carried out completely in the same manner as the above-described start-up mode in the certain use state. To be specific, hereinafter, the above-described series of operations are periodically repeated.
Since the fuel cell system 400 of Modification Example is configured as above, the concentration distributions of the fuel gas are hardly non-uniform between the cells close to the fuel gas inlets 121A and 121B and the cells far from the fuel gas inlets 121A and 121B. As a result, the concentrations of the fuel gas become uniform among the cells of the cell stack 102. Moreover, the concentration distributions of the oxidizing gas are hardly non-uniform between the cells close to the oxidizing gas inlets 141A and 141B and the cells far from the oxidizing gas inlets 141A and 141B. As a result, the concentrations of the oxidizing gas become uniform among the cells of the cell stack 102. Therefore, even if the fuel cell system 400 repeatedly starts up and stops, the decrease of the electric power generating performance in the entire cell stack 102 is suppressed.

Moreover, a modification example of the fuel cell system of Embodiment 2 may be configured in the same manner as above. To be specific, the fuel cell system of Embodiment 2 may be configured such that the components configured to supply the fuel gas shown in Fig. 6 do not include the components for the replacement gas. Moreover, the fuel cell system of Embodiment 2 may be configured such that the components configured to supply the oxidizing gas shown in Fig. 8 do not include the components for the replacement gas.

### Examples

Hereinafter, Examples of the fuel cell system of the present invention will be explained.

### Example 1

As Example of the present invention, the fuel cell system 100 including the fuel cell 101 described below and having the configuration (including the switching of the flow direction of the reactant gas) described in Embodiment 1 was manufactured.
Herein, the specific configuration of only the fuel cell 101 will be explained. Used as the fuel cell 101 was a polymer electrolyte fuel cell. The other components of the fuel cell system 100 were configured as known in the art.

First, a method for manufacturing the anode and the cathode will be explained.

Acetylene black powder (Denka Black (trademark) produced by Denki Kagaku Kogyo Kabushiki Kaisha) having a particle diameter of 35 nm, and a PTFE aqueous dispersion (D-1 produced by Daikin Industries, Ltd.) were mixed to prepare a solution containing 20 weight % of PTFE based on the dry weight. Then, this solution was applied to carbon paper (TGPH060H produced by Toray Industries, Inc.), so that the carbon paper was impregnated with the solution. The carbon paper was subjected to a heat treatment using a hot air drier at 300°C. Thus, a gas diffusion layer having a thickness of about 200 µm was formed.

Next, used as a cathode catalyst was a catalyst (containing 50 weight % of platinum) obtained in such a manner that ketjen black powder (Ketjen Black EC produced by Ketjen Black International Company Ltd.) having a particle diameter of 30 nm supported a platinum catalyst. Meanwhile, used as an anode catalyst was a catalyst (containing 30 weight % of platinum) obtained in such a manner that ketjen black powder (Ketjen Black EC produced by Ketjen Black International Company Ltd.) having a particle diameter of 30 nm supported a platinum catalyst and a ruthenium catalyst.
Then, the cathode catalyst was mixed with a perfluoro carbon sulfonic acid ionomer (produced by Aldrich in U.S.) that is a dispersing liquid containing 5 weight % of Nafion (trademark). The obtained mixture was applied to the gas diffusion layer, and the gas diffusion layer was dried. Thus, a cathode catalyst layer having a thickness of 10 to 20 µm was formed. Here, the gas diffusion layer and the cathode catalyst layer constitute the cathode. Meanwhile, the anode catalyst was mixed with the perfluoro carbon sulfonic acid ionomer. The obtained mixture was applied to the gas diffusion layer, and the gas diffusion layer was dried. Thus, an anode catalyst layer having a thickness of 10 to 20 µm was formed. Here, the gas diffusion layer and the anode catalyst layer constitute the anode. Then, in each of the electrodes in each of which the catalyst layer was formed, the amount of the platinum catalyst was 0.5 mg/cm², and the amount of the perfluoro carbon sulfonic acid ionomer was 1.2 mg/cm².

Next, the cathode was disposed on one surface of a polymer electrolyte membrane (Nafion112 (trademark) produced by DuPont in U.S.) and the anode was disposed on the other surface of the polymer electrolyte membrane such that each of the catalyst layers of the electrodes contacted the polymer electrolyte membrane. Moreover, a gasket made of fluorocarbon rubber and having a thickness of about 200 µm was disposed so as to contact a periphery portion of the polymer electrolyte membrane. Then, these members were combined by hot pressing to manufacture the MEA.
Next, a graphite plate having an external size of 220 mm x 220 mm and a thickness of 3 mm was machined to manufacture an electrically-conductive separator on which a reactant gas passage and a manifold hole were formed. The reactant gas passage had a width of 2 mm and a depth of 2 mm, and had a serpentine shape. Moreover, the same graphite plate as above was machined to manufacture an electrically-conductive separator on which a cooling water passage was formed. Then, the electrically-conductive separators and the MEA were combined to form a unit cell. Here, a region where the electrically-conductive separator and the MEA contact was set in a range of a region of 150 mm long x 150 mm wide. Then, 60 unit cells were stacked to form the cell stack 102. Thus, the fuel cell 101 was manufactured.
In Example 1, the fuel cell 101 was used to manufacture the fuel cell system 100 having the configuration described in Embodiment 1.

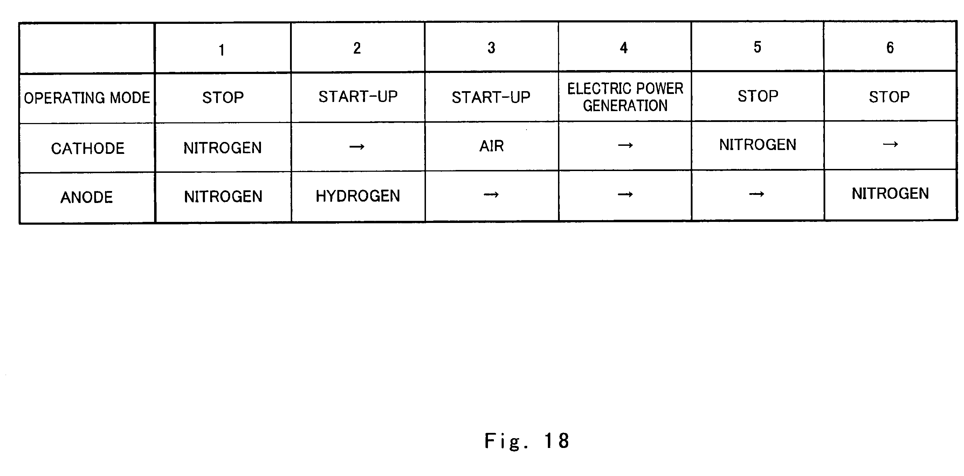

Air was used as a cathode side reactant gas (oxidizing gas), hydrogen was used as an anode side reactant gas (fuel gas), and a nitrogen gas was used as a replacement gas in both electrodes. When the replacement was carried out between different gases, the flow rate of an inflow gas, such as air, hydrogen and nitrogen, was set to 1 L/min, and a time for the replacement was set to 2 minutes.
Then, the fuel cell system 100 was operated by an operating cycle of the operating modes shown in Fig. 18. To be specific, as shown in Fig. 18, when the fuel cell system 100 was in the stop state (stand-by mode), the anode and the cathode were filled with nitrogen as the replacement gas and maintained in this state. In a first start-up time (start-up mode), hydrogen as the fuel gas was supplied to the anode, and the cathode remained to be filled with nitrogen. In a second start-up time (start-up mode), air was supplied to the cathode. Then, in a state where hydrogen was supplied to the anode and air was supplied to the cathode, the electric power was generated (electric power generating mode). In a first stop state (stop mode), the air in the cathode was replaced with nitrogen, and hydrogen was supplied to the anode. In a second stop state (stop mode), hydrogen in the anode was also replaced with nitrogen. After that, the fuel cell system returned to the stop state (stand-by mode). This cycle is one cycle.
The electric power generation was carried out under such conditions that a current density was 0.18 A/cm², an oxidizing gas utilization ratio was 55%, a fuel gas utilization ratio was 75%, a reactant gas dew point was 60°C, and a cooling water inlet temperature was 60°C.

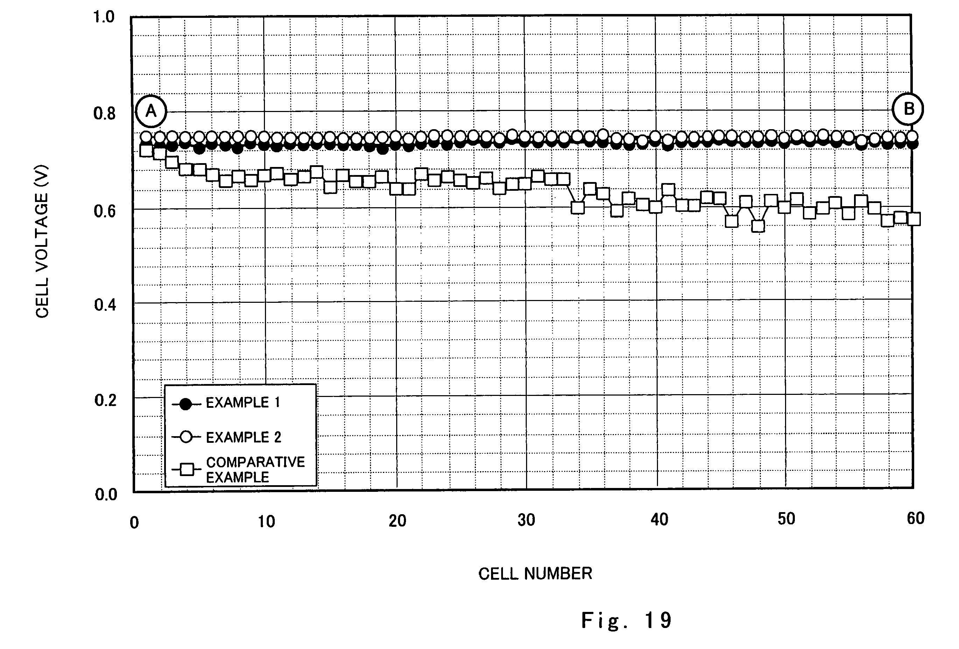

Where the electric power generation and the stopping were regarded as one cycle, a time for the electric power generation was an hour, and a time for the stopping was an hour, 1,000 cycles were repeatedly carried out. Then, the voltages of respective cells were measured, and these were regarded as evaluations of the electric power generating performance. Fig. 19 shows measured values of the voltages of respective cells. Moreover, Table 1 shows an average cell voltage of all the cells, and its standard deviation.

### Example 2

Using a cell stack similar to the cell stack described in Example 1, the fuel cell system 200 having the configuration (including switching of the flow direction of the reactant gas) described in Embodiment 2 was manufactured. The other operating conditions were the same as those of Example 1.
Where the electric power generation and the stopping were regarded as one cycle, the time for the electric power generation was an hour, and the time for the stopping was an hour, 1,000 cycles were repeatedly carried out. Then, the voltages of respective cells were measured, and these were regarded as evaluations of the electric power generating performance. Fig. 19 shows measured values of the voltages of respective cells. Moreover, Table 1 shows the average cell voltage of all the cells, and its standard deviation.

### Comparative Example

The fuel cell system 300 having the configuration described in Comparative Embodiment was manufactured. The other operating conditions were the same as those of Example 1.
Where the electric power generation and the stopping were regarded as one cycle, the time for the electric power generation was an hour, and the time for the stopping was an hour, 1,000 cycles were repeatedly carried out. Then, the voltages of respective cells were measured, and these were regarded as evaluations of the electric power generating performance. Fig. 19 shows measured values of the voltages of respective cells. Moreover, Table 1 shows the average cell voltage of all the cells, and its standard deviation.

**Table 1**

| | Average Cell Voltage (mV) | Standard Deviation (mV) |
|---|---|---|
| Example 1 | 735 | 4 |
| Example 2 | 747 | 2 |
| Comparative Example | 635 | 35 |

### Comparison

Fig. 19 is a graph showing cell voltages of respective cells of the cell stack 102 of each of the fuel cell systems. The cell numbers shown in Fig. 19 show the number of cells arranged from the A-side to B-side of the cell stack 102. Table 1 shows the average cell voltage of all the cells of each of the fuel cell systems of Example 1, Example 2 and Comparative Example, and its standard deviation. Referring to Fig. 19 and Table 1, the electric power generating performances of the fuel cell systems of Example 1, Example 2 and Comparative Example will be compared to one another.

As shown in Fig. 19, in the fuel cell system 300 of Comparative Example, there was a significant difference in the cell voltage between the cells (on the A-side in Figs. 10 and 12) close to the reactant gas inlets 121 and 141 and the cells (on the B-side in Figs. 10 and 12) far from the reactant gas inlets 121 and 141, with respect. to a direction in which the gas inflows. It is thought that this is because since the direction in which the gas inflows was one direction from the A end to B end of the reactant gas supplying manifold, the gas replacement states became non-uniform in the cell stack 102.

Meanwhile, in the fuel cell system 100 of Example 1 and the fuel cell system 200 of Example 2, there was no significant difference in the cell voltage between the cells (on the A-side in Figs. 2 and 4 and the A-side in Figs. 6 and 8) close to the reactant gas inlets 121A and 141A and the cells (on the B-side in Figs. 2 and 4 and the B-side in Figs. 6 and 8) far from the reactant gas inlets 121A and 141A. It is thought that this is because since the directions in which the reactant gas and the replacement gas inflow were switched, the gas replacement states could be made uniform among the cells in the cell stack 102. Moreover, as shown in Table 1, high average cell voltage could be maintained, and the standard deviation of the cell voltages was made small, that is, the variation of the cell voltages was suppressed. Therefore, the decrease of the electric power generating performance of the cell stack 102 was suppressed.
Moreover, in the fuel cell system 200 of Example 2, there was no significant difference in the cell voltage between the cells (on the A-side in Figs. 6 and 8) close to the reactant gas inlets 121A and 141A and the cells (on the B-side in Figs. 6 and 8) far from the reactant gas inlets 121A and 141A. It is thought that this is because since the directions in which the reactant gas and the replacement gas inflow were switched plural times in the fuel cell system 200 of Example 2, the time for the replacement of the gas in the cell stack 102 could be shortened, and the influence caused due to the residual gas could be decreased. Moreover, as shown in Table 1, high average cell voltage could be maintained, and the standard deviation of the cell voltages was made small, that is, the variation of the cell voltages was suppressed. Therefore, the decrease of the electric power generating performance of the cell stack 102 was further suppressed.

In the fuel cell system of each of Embodiments 1 and 2, the reactant gas inlet selecting device is included in both the components configured to supply the fuel gas and the components configured to supply the oxidizing gas. However, the reactant gas inlet selecting device may be included in the components configured to supply the fuel gas or the components configured to supply the oxidizing gas.
Moreover, in the fuel cell system of each of Embodiments 1 and 2, two reactant gas inlets are formed on the fuel gas supplying manifold 106 and the oxidizing gas supplying manifold 108 to be located at both ends of the cell stack 102. However, the same effects as above can be obtained even if each of the fuel gas supplying manifold 106 and the oxidizing gas supplying manifold 108 is formed to have a U shape, and the reactant gas inlet is formed on one end of the cell stack 102.

Further, as shown in Figs. 2, 4, 6 and 8, the fuel cell system 100 of Embodiment 1 and the fuel cell system 200 of Embodiment 2 are configured to separately include the replacement gas supplying device 130 disposed on a side of the fuel gas supplying device 120, and the replacement gas supplying device 150 disposed on a side of the oxidizing gas supplying device 140. However, the fuel cell system of the present invention is not limited to this configuration. For example, the fuel cell system of the present invention may be configured such that the fuel gas supplying device 120 and the oxidizing gas supplying device 140 share a single replacement gas supplying device.
From the foregoing explanation, many modifications and other embodiments of the present invention are obvious to one skilled in the art. Therefore, the foregoing explanation should be interpreted only as an example, and is provided for the purpose of teaching the best mode for carrying out the present invention to one skilled in the art. The structures and/or functional details may be substantially modified within the spirit of the present invention.

### Industrial Applicability

The fuel cell system of the present invention is useful as a fuel cell system in which even if the start-up and the stopping are repeatedly carried out, the decrease of the electric power generating performance of the entire cell stack is suppressed in such a manner that the gas replacement states among the cells in the cell stack are made uniform.

## Claims

1. A fuel cell system comprising:
a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first fuel gas inlet which communicates with one end of the fuel gas supplying manifold; and a second fuel gas inlet which communicates with the other end of the fuel gas supplying manifold, said fuel cell being configured to cause the fuel gas and the oxidizing gas to react with each other in the cells to generate electric power;
a fuel gas supplying device which supplies the fuel gas; and
a fuel gas inlet selecting device which selectively supplies the fuel gas, which is supplied from said fuel gas supplying device, to a first fuel gas inlet or a second fuel gas inlet.

2. The fuel cell system according to claim 1, further comprising a control device which controls said fuel gas inlet selecting device such that a destination to which the fuel gas supplied from said fuel gas supplying device is supplied is switched between the first fuel gas inlet and the second fuel gas inlet.

3. The fuel cell system according to claim 1, further comprising:
a replacement gas supplying device which supplies a replacement gas used to replace the fuel gas; and
a selective gas supplying device which selectively supplies the fuel gas supplied from said fuel gas supplying device or the replacement gas supplied from said replacement gas supplying device, wherein
said fuel gas inlet selecting device is configured to selectively supply the fuel gas or replacement gas, which is supplied from said selective gas supplying device, to the first fuel gas inlet or the second fuel gas inlet.

4. The fuel cell system according to claim 3, further comprising a control device which controls said fuel gas inlet selecting device such that a destination to which the gas supplied from said selective gas supplying device is supplied is switched between the first fuel gas inlet and the second fuel gas inlet, wherein:
said fuel cell system includes an electric power generating mode of generating the electric power to supply the electric power to an external load, a start-up mode of transitioning from a stop state to the electric power generating mode, and a stop mode of transitioning from the electric power generating mode to the stop state;
said control device is configured to control said selective gas supplying device such that the fuel gas is supplied to purge a gas in the cell stack in the start-up mode, the fuel gas is supplied in the electric power generating mode, and the replacement gas is supplied to replace the gas in the cell stack with the replacement gas in the stop mode; and
said control device is configured to control said fuel gas inlet selecting device such that when switching between any two of the start-up mode, the electric power generating mode and the stop mode, or in any one of the modes, the destination to which the gas supplied from said selective gas supplying device is supplied is switched between the first fuel gas inlet and the second fuel gas inlet.

5. The fuel cell system according to claim 4, wherein said control device is configured to control said fuel gas inlet selecting device such that when switching between the electric power generating mode and the stop mode, the destination to which the gas supplied from said selective gas supplying device is supplied is switched between the first fuel gas inlet and the second fuel gas inlet.

6. The fuel cell system according to claim 4, wherein said control device is configured to control said fuel gas inlet selecting device such that in the start-up mode or the stop mode, the destination to which the gas supplied from said selective gas supplying device is supplied is switched plural times between the first fuel gas inlet and the second fuel gas inlet.

7. The fuel cell system according to claim 2, wherein:
said fuel gas inlet selecting device includes: a three-way valve which has first to third ports and is able to selectively connect the third port to the first port or the second port; a first gas pipe which connects the first port to the first fuel gas inlet; and a second gas pipe which connects the second port to the second fuel gas inlet; and
the third port is connected to a gas pipe which supplies the gas from said selective gas supplying device.

8. The fuel cell system according to claim 2, wherein:
said fuel gas inlet selecting device includes: a T-shaped joint; a first gas pipe which connects a first end of the T-shaped joint to the first fuel gas inlet; an on-off valve disposed on a portion of the first gas pipe; a second gas pipe which connects a second end of the T-shaped joint to the second fuel gas inlet; and an on-off valve disposed on a portion of the second gas pipe; and
a third end of the T-shaped joint is connected to a gas pipe which supplies the gas from said selective gas supplying device.

9. A method for operating a fuel cell system comprising:
a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first fuel gas inlet which communicates with one end of the fuel gas supplying manifold; and a second fuel gas inlet which communicates with the other end of the fuel gas supplying manifold, said fuel cell being configured to cause the fuel gas and the oxidizing gas to react with each other in the cells to generate electric power;
a fuel gas supplying device which supplies the fuel gas;
a replacement gas supplying device which supplies a replacement gas used to replace the fuel gas;
a selective gas supplying device which selectively supplies the fuel gas supplied from said fuel gas supplying device or the replacement gas supplied from said replacement gas supplying device; and
a fuel gas inlet selecting device which selectively supplies the fuel gas or replacement gas, which is supplied from said selective gas supplying device, to the first fuel gas inlet or the second fuel gas inlet,
the method comprising:
a first step, including an electric power generating mode of generating the electric power to supply the electric power to an external load, a start-up mode of transitioning from a stop state to the electric power generating mode, and a stop mode of transitioning from the electric power generating mode to the stop state, of controlling said selective gas supplying device such that the fuel gas is supplied to purge a gas in the cell stack in the start-up mode, the fuel gas is supplied in the electric power generating mode, and the replacement gas is supplied to replace the gas in the cell stack with the replacement gas in the stop mode; and
a second step of controlling said fuel gas inlet selecting device such that when switching between any two of the start-up mode, the electric power generating mode and the stop mode, or in any one of the modes, a destination to which the gas supplied from said selective gas supplying device is supplied is switched between the first fuel gas inlet and the second fuel gas inlet.

10. A fuel cell system comprising:
a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first oxidizing gas inlet which communicates with one end of the oxidizing gas supplying manifold; and a second oxidizing gas inlet which communicates with the other end of the oxidizing gas supplying manifold, said fuel cell being configured to cause the fuel gas and the oxidizing gas to react with each other in the cells to generate electric power;
an oxidizing gas supplying device which supplies the oxidizing gas;
a selective gas supplying device which selectively supplies the oxidizing gas supplied from said oxidizing gas supplying device; and
an oxidizing gas inlet selecting device which selectively supplies the oxidizing gas, which is supplied from said selective gas supplying device, to the first oxidizing gas inlet or the second oxidizing gas inlet.

11. The fuel cell system according to claim 10, further comprising a control device which controls said oxidizing gas inlet selecting device such that a destination to which the oxidizing gas supplied from said oxidizing gas supplying device is supplied is switched between the first oxidizing gas inlet and the second oxidizing gas inlet.

12. The fuel cell system according to claim 10, further comprising:
a replacement gas supplying device which supplies a replacement gas used to replace the oxidizing gas; and
a selective gas supplying device which selectively supplies the oxidizing gas supplied from said oxidizing gas supplying device or the replacement gas supplied from said replacement gas supplying device, wherein
said oxidizing gas inlet selecting device is configured to selectively supply the oxidizing gas or replacement gas, which is supplied from said selective gas supplying device, to the first oxidizing gas inlet or the second oxidizing gas inlet.

13. The fuel cell system according to claim 12, further comprising a control device which controls said oxidizing gas inlet selecting device such that a destination to which the gas supplied from said selective gas supplying device is supplied is switched between the first oxidizing gas inlet and the second oxidizing gas inlet, wherein:
said fuel cell system includes an electric power generating mode of generating the electric power to supply the electric power to an external load, a start-up mode of transitioning from a stop state to the electric power generating mode, and a stop mode of transitioning from the electric power generating mode to the stop state;
said control device is configured to control said selective gas supplying device such that the oxidizing gas is supplied to purge a gas in the cell stack in the start-up mode, the oxidizing gas is supplied in the electric power generating mode, and the replacement gas is supplied to replace the gas in the cell stack with the replacement gas in the stop mode; and
said control device is configured to control said oxidizing gas inlet selecting device such that when switching between any two of the start-up mode, the electric power generating mode and the stop mode, or in any one of the modes, the destination to which the gas supplied from said selective gas supplying device is supplied is switched between the first oxidizing gas inlet and the second oxidizing gas inlet.

14. The fuel cell system according to claim 13, wherein said control device is configured such that when switching between the electric power generating mode and the stop mode, the destination to which the gas supplied from said selective gas supplying device is supplied is switched between the first oxidizing gas inlet and the second oxidizing gas inlet.

15. The fuel cell system according to claim 13, wherein said control device is configured such that in the start-up mode or the stop mode, the destination to which the gas supplied from said selective gas supplying device is supplied is switched plural times between the first oxidizing gas inlet and the second oxidizing gas inlet.

16. The fuel cell system according to claim 11, wherein:
said oxidizing gas inlet selecting device includes: a three-way valve which has first to third ports and is able to selectively connect the third port to the first port or the second port; a first gas pipe which connects the first port to the first oxidizing gas inlet; and a second gas pipe which connects the second port to the second oxidizing gas inlet; and
the third port is connected to a gas pipe which supplies the gas from said selective gas supplying device.

17. The fuel cell system according to claim 11, wherein:
said oxidizing gas inlet selecting device includes a T-shaped joint; a first gas pipe which connects a first end of the T-shaped joint to the first oxidizing gas inlet; an on-off valve disposed on a portion of the first gas pipe; a second gas pipe which connects a second end of the T-shaped joint to the second oxidizing gas inlet; and an on-off valve disposed on a portion of the second gas pipe; and
a third end of the T-shaped joint is connected to a gas pipe which supplies the gas from said selective gas supplying device.

18. A method for operating a fuel cell system comprising:
a fuel cell including: a plurality of cells, each including a polymer electrolyte membrane, and an anode and a cathode which are formed to sandwich the polymer electrolyte membrane; a cell stack formed by stacking the cells; a fuel gas supplying manifold, a fuel gas discharging manifold, an oxidizing gas supplying manifold and an oxidizing gas discharging manifold which are formed on the cell stack to extend in a direction in which the cells are stacked; a fuel gas passage which guides a fuel gas from the fuel gas supplying manifold to the anode and further to the fuel gas discharging manifold; an oxidizing gas passage which guides an oxidizing gas from the oxidizing gas supplying manifold to the cathode and further to the oxidizing gas discharging manifold; a first oxidizing gas inlet which communicates with one end of the oxidizing gas supplying manifold; and a second oxidizing gas inlet which communicates with the other end of the oxidizing gas supplying manifold, said fuel cell being configured to cause the fuel gas and the oxidizing gas to react with each other in the cells to generate electric power;
an oxidizing gas supplying device which supplies the oxidizing gas;
a replacement gas supplying device which supplies a replacement gas used to replace the oxidizing gas;
a selective gas supplying device which selectively supplies the oxidizing gas supplied from said oxidizing gas supplying device or the replacement gas supplied from said replacement gas supplying device;
an oxidizing gas inlet selecting device which selectively supplies the oxidizing gas or replacement gas, which is supplied from said selective gas supplying device, to the first oxidizing gas inlet or the second oxidizing gas inlet; and
a control device,
the method comprising the steps of:
where the fuel cell system includes an electric power generating mode of generating the electric power to supply the electric power to an external load, a start-up mode of transitioning from a stop state to the electric power generating mode, and a stop mode of transitioning from the electric power generating mode to the stop state, controlling said selective gas supplying device such that the oxidizing gas is supplied to purge a gas in the cell stack in the start-up mode, the oxidizing gas is supplied in the electric power generating mode, and the replacement gas is supplied to replace the gas in the cell stack with the replacement gas in the stop mode; and
controlling said oxidizing gas inlet selecting device such that when switching between any two of the start-up mode, the electric power generating mode and the stop mode, or in any one of the modes, a destination to which the gas supplied from said selective gas supplying device is supplied is switched between the first oxidizing gas inlet and the second oxidizing gas inlet.

19. A fuel cell comprising:
a plurality of cells, each including a polymer electrolyte membrane, and a first electrode and a second electrode which are formed to sandwich the polymer electrolyte membrane, one of the first electrode and the second electrode being an anode, and the other one of them being a cathode;
a cell stack formed by stacking the cells;
a first reactant gas supplying manifold, a first reactant gas discharging manifold, a second reactant gas supplying manifold and a second reactant gas discharging manifold which are formed on the cell stack to extend in a direction in which the cells are stacked;
a first reactant gas passage which guides a first reactant gas from the first reactant gas supplying manifold to the first electrode and further to the first reactant gas discharging manifold, the first reactant gas being a reactant gas which is a fuel gas or an oxidizing gas and is supplied to the one electrode which is the anode or the cathode;
a second reactant gas passage which guides a second reactant gas from the second reactant gas supplying manifold to the second electrode and further to the second reactant gas discharging manifold, the second reactant gas being a reactant gas which is the fuel gas or the oxidizing gas and is supplied to the other electrode which is the anode or the cathode;
one first reactant gas inlet which communicates with one end of the first reactant gas supplying manifold; and
another first reactant gas inlet which communicates with the other end of the first reactant gas supplying manifold.
